# Europäisches Patentamt

## European Patent Office

## Office européen des brevets

(11) Numéro de publication: **0 138 711**

**B1**

(12) # FASCICULE DE BREVET EUROPÉEN

(45) Date de publication du fascicule du brevet:
**20.07.88**

(21) Numéro de dépôt: **84402050.3**

(22) Date de dépôt: **11.10.84**

(51) Int. Cl.⁴: **G 21 C 19/26,** G 21 C 17/06

(54) Procédé et installation de reconstitution d'assemblages de combustible nucléaire.

(30) Priorité: **11.10.83 FR 8316145**

(43) Date de publication de la demande:
**24.04.85 Bulletin 85/17**

(45) Mention de la délivrance du brevet:
**20.07.88 Bulletin 88/29**

(84) Etats contractants désignés:
**BE CH DE GB IT LI SE**

(56) Documents cité:
**EP-A-0 033 074**
**FR-A-2 360 963**
**FR-A-2 521 763**
**GB-A-2 115 599**

(73) Titulaire: **FRAMATOME, Tour Fiat 1 place de la Coupole, F-92400 Courbevoie (FR)**

(72) Inventeur: **Beuneche, Daniel, 40, rue Blaise Pascal, F-69660 Collonges Au Mont D'Or (FR)**
Inventeur: **Amier, Pierre, Rue de Montlys, F-69420 Condrieu (FR)**

(74) Mandataire: **Fort, Jacques, CABINET PLASSERAUD 84, rue d'Amsterdam, F-75009 Paris (FR)**

LIBER, STOCKHOLM 1988

## Description

L'invention concerne la reconstitution d'assemblages de combustible nucléaire du type comprenant un squelette formé de deux embouts reliés par des tirants fixés aux embouts et de grilles réparties entre les embouts le long des tirants et destinées à maintenir un faisceau de combustible emprisonné entre les embouts.

On utilise de façon quasi universel le des assemblages du type ci-dessus dans les réacteurs refroidis et modérés à l'eau légère notamment dans les réacteurs à eau sous pression. Dans divers cas, il devient nécessaire de démonter un assemblage et d'enlever tout ou partie des crayons qu'il contient cette situation se présente notamment lorsque des éléments du squelette d'un assemblage sont endommagés à un point tel qu'il est nécessaire de reconstituer un assemblage en enlevant les crayons pour les reporter dans un squelette neuf. Une autre situation est celle où l'on souhaite transférer les crayons d'un assemblage, ou certains d'entre eux, dans un assemblage neuf suivant une disposition différente ou en les associant à des crayons neufs ou d'autre nature (par exemple pour associer des crayons contenant de l'oxyde d'uranium à des crayons contenant un absorbant neutronique, un matériau inerte ou un combustible enrichi au plutonium). Une autre situation encore est celle où l'on souhaite constituer un assemblage modifiant le taux de modération.

On sait par ailleurs que différents modes de solidarisation des éléments constitutifs du squelette ont été proposés. Dans la plupart des assemblages actuellement en service, les tirants sont fixés de façon définitive à l'embout supérieur et sont fixés à l'embout inférieur par des moyens permettant d'enlever ce dernier. Parmi les assemblages appartenant à ce groupe, certains utilisent une fixation par douille filetée bloquée ensuite en place par goupille; d'autres utilisent une fixation par douille filetée présentant une jupe qui est ensuite déformée pour interdire la rotation de la douille. La demande de brevet FR-A-2 521 763 et la demande correspondante GB-A-2 115 599 donnent une description d'assemblage appartenant à ce type.

Un autre groupe d'assemblages est constitué par ceux dont on trouvera une description dans la demande de brevet EP-A-0 109 902 la société demanderesse, qui comportent au contraire un embout supérieur enlevable, cette solution ayant l'avantage de supprimer la nécessité d'un basculement de 180° de l'assemblage entre sa position de stockage et la position dans laquelle se fait l'enlèvement des crayons.

Le document FR-A-2 521 763 fait également connaître un procédé conforme au préambule de la revendication 1. Mais ce procédé implique d'extraire verticalement un à un les crayons, de les transférer au droit d'un squelette neuf et de les y insérer un à un. Pour éviter le risque d'erreur, des crayons postiches sont placés dans un alvéole sur deux du squelette neuf, les crayons destinés à remplir les autres alvéoles sont transférés puis les crayons postiches sont enlevés pour permettre le transfert des crayons de combustible restants. Ces opérations sont longues du fait de la complexité des déplacements et de la mise en place des crayons postiches.

L'invention vise notamment à fournir un procédé et une installation permettant de reconstituer un assemblage de combustible nucléaire par transfert, vers un squelette, de crayons de combustible prélevés dans un assemblage existant, généralement fortement irradié et souvent endommagé, tout en ne mettant en oeuvre que des moyens simples, en limitant les risques d'erreur ou de panne. L'invention vise également à fournir un procédé et une installation ayant une grande souplesse d'utilisation et, en particulier, adaptable aux différents groupes d'assemblage de combustible mentionnés ci-dessus (à embout supérieur fixe ou démontable).

Dans ce but, l'invention propose notamment un procédé de reconstitution d'assemblage du type défini dans le préambule de la revendication 1, caractérisé en ce qu'on amène, au dessus du premier alvéole et en alignement avec lui, un second alvéole contenant et retenant un squelette neuf d'assemblage démuni de ses embouts dans la même orientation que l'assemblage du premier alvéole; on interpose un masque de retenue et de guidage des crayons à extraire entre les alvéoles; on tire les crayons à extraire de l'assemblage dans le squelette; et on complète le squelette par mise en place des embouts.

Dans le cas où c'est l'embout inférieur de l'assemblage qui est amovible, cet assemblage est d'abord placé en position normale dans le premier alvéole, bloqué en place dans ce dernier, puis l'alvéole est retourné; le squelette neuf est ensuite amené en position inversée dans son alvéole pour permettre de tirer vers le haut les crayons à extraire de l'assemblage contenu dans le premier alvéole vers le squelette.

Cette façon de procéder simplifie la manutention des crayons et, au surplus, fait disparaître à peu près complètement le risque d'engager un crayon dans des passages non alignés des grilles du squelette neuf: en effet, la pince qui doit être descendue à travers les grilles de l'assemblage neuf pour venir saisir les crayons à tirer vers le haut assure un guidage.

Au surplus, le squelette neuf peut être prévu avec des crayons neufs de matériau fissile, fertile, inerte ou absorbant qui contribueront à guider les crayons de combustible dans leur remontée.

Dans un mode avantageux d'exécution de l'invention, le procédé permet de reconstituer, à partir d'un assemblage combustible du type dont seul l'embout inférieur est enlevable, un assemblage prévu pour permettre l'extraction de crayons après enlèvement de l'embout supérieur, c'est-à-dire un assemblage qui peut être réparé par mise en oeuvre de l'installation décrite dans la demande de brevet EP-A-0 109 902.

Ce procédé commence par une séquence d'opérations qui reste la même quelle que soit la nature de l'assemblage du squelette neuf. L'assemblage endommagé est déposé dans un alvéole inférieur placé dans une piscine et immobilisé dans l'alvéole; l'alvéole est retourné de 180°; l'alvéole est levé dans la piscine, tout en restant immergé, jusqu'à un niveau tel que l'on puisse enlever un bouchon inférieur de l'alvéole, puis placer un masque de guidage; les moyens de fixation de l'embout inférieur de l'assemblage endommagé sont éliminés, par exemple par découpe de la goupille puis enlèvement de vis dans le cas d'un assemblage de type courant; l'alvéole inférieur contenant l'assemblage débarrassé de son embout inférieur est descendu en position bas se dans la piscine; un alvéole supérieur dans lequel a déjà été placé et immobilisé un squelette neuf non muni de ses embouts, disposé en position inversée, est amené au-dessus de l'alvéole inférieur et aligné avec lui; un outil de transfert des crayons est positionné au-dessus de l'alvéole et une pince dont il est muni est descendue à travers le squelette jusqu'au niveau du crayon à extraire, puis actionnée pour saisir le crayon et relevée dans le squelette où le crayon est libéré; les opérations sont reprises jusqu'à achèvement du transfert des crayons; l'embout inférieur du squelette neuf est fixé; l'alvéole supérieur peut alors être retiré, puis retourné, avant mise en place de son embout supérieur.

Le squelette de l'assemblage endommagé une fois vidé peut être complété par remise en place de l'embout inférieur, avant évacuation.

L'invention propose également une installation permettant de mettre en oeuvre le procédé défini ci-dessus, avantageusement complétée par des moyens permettant également de réparer un assemblage dont certains crayons sont à remplacer, de façon à accroître le domaine d'emploi.

L'invention sera mieux comprise à la lecture de la description qui suit d'une installation qui constitue un mode particulier de mise en oeuvre de l'invention, et du procédé mis en oeuvre dans cette installation, donnée à titre exemple. La description se réfère aux dessins qui l'accompagnent, dans lesquels:
- la Figure 1 est une vue simplifiée d'un assemblage de ccmbustible pour réacteur à eau légère de type courant, en élévation et en coupe partielle;
- la Figure 2 est, une vue simplifiée en perspective, vue de dessus, de la station de réparation d'une installation suivant l'invention;
- les Figures 3 et 4 montent respectivement, en perspective, un dispositif de basculement appartenant à l'installation et un détail de ce dispositif;
- la Figure 5 est une vue en perspective des alvéoles mis en oeuvre dans l'installation, représentés dans la position relative qu'ils occupent lors du transfert des crayons de combustible, les éléments placés entre les alvéoles n'étant pas figurés;
- les Figures 6 et 7 montrent, à grande échelle, les parties de la Figure 5 situées respectivement dans les cadres VI et VII;
- la Figure 7A est une vue à grande échelle du bouchon supérieur de l'alvéole inférieur, en coupe suivant un plan passant par l'axe du bouchon;
- la Figure 8 est, une vue d'ensemble en perspective d'un outil de transfert des crayons utilisable dans l'installation, les éléments placés dans le cadre IX n'étant pas représentés;
- la Figure 9 montre, à grande échelle, la partie de l'outil de transfert des crayons qui se trouve dans le cadre IX de la Figure 8;
- la Figure 9A montre l'équipage mobile de l'outil de la Fig. 8;
- les Figures 10 et 11 montrent respectivement, en perspective, un outil de manutention d'alvéole et un outil de réglage utilisables dans l'installation de la Figure 2;
- les Figures 12 et 13 sont des représentations simplifiées d'un outil de fraisage de goupille et de ses accessoires, utilisable dans l'installation de la Figure 2, en élévation et en vue de dessus respectivement;
- la Figure 14 est une vue en coupe verticale de la partie basse de l'outil de fraisage de la Figure 12;
- la Figure 15 est une vue de dessus du masque de fraisage qui coopère avec l'outil des Figures 12 à 14;
- la Figure 16 montre, à grande échelle, le détail contenu dans le cercle XVI de la Figure 14;
- la Figure 17 est une vue, en élévation et en coupe longitudinale partielle, d'un outil tournevis de démontage utilisable dans l'installation de la Figure 2;
- la Figure 18, similaire à un fragment de la Figure 17, montre la partie inférieure d'un outil tournevis de remontage d'embout utilisable dans l'installation de la Figure 2;
- la Figure 19 est une vue en perspective d'un outil d'expansion de jupe de vis ou de douille filetée, utilisable dans l'installation de la Figure 2;
- les Figures 20A et 20B sont des vues en perspective montrant la jupe d'une vis, respectivement avant et après expansion;
- la Figure 21, similaire à la Figure 19, montre un outil toise utilisable dans l'installation de la Figure 2;
- les Figures 22A, 22B et 22C sont des schémas montrant la succession des étapes lors de la mise en oeuvre d'un procédé suivant l'invention.

Avant de décrire une installation suivant l'invention, on rappellera brièvement la constitution d'un assemblage de combustible auquel elle est applicable.

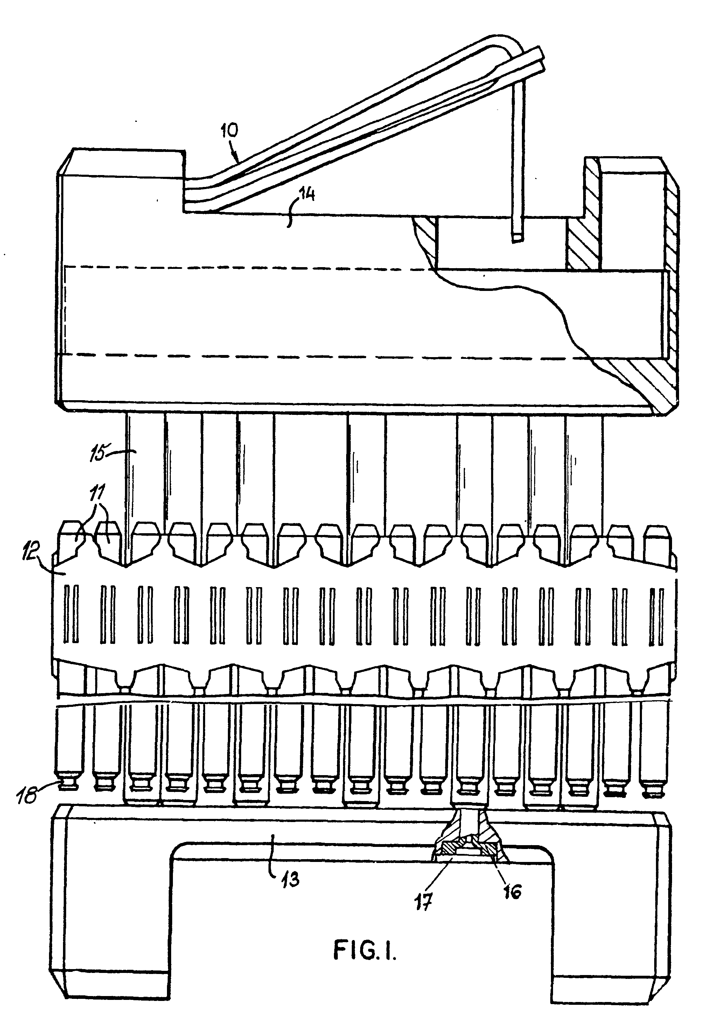

L'assemblage 10 montré en Figure 1 comporte un faisceau de crayons de combustible 11, maintenus par des grilles entretoises 12 réparties le long du faisceau. Les grilles 12 ménagent des passages dont la plupart sont traversés par des crayons de combustible 11, tandis que les autres sont traversés par des tirants 15 fixés à un embout inférieur 13 et à un embout supérieur 14 présentant, en sa partie supérieure, une forme permettant de la saisir à l'aide d'un outil de manutention. Les tirants 15, constitués par des tubes de guidage permettant le coulissement d'éléments extérieurs à l'assemblage sont également fixés à l'embout supérieur. Dans un assemblage de comustible classique cette fixation à l'embout supérieur (non visible sur la Figure 1) est permanente. Ils sont fixés à l'embout inférieur par des douilles filetées 16 immobilisées par des goupilles transversales 17. Seul le bouchon inférieur des crayons 11 présente une gorge de préhension 10 dans un tel assemblage classique.

Au contraire, dans des assemblages récents (non représentés), les tirants 15 sont fixés à l'embout supérieur 14 par des moyens démontables constitués par des douilles présentant une partie basse filetée destinée à se visser dans la partie haute d'un tirant et une tête d'appui sur l'embout 14.

L'installation qui sera maintenant décrite permet notamment de reconstituer un assemblage combustible à partir d'un squelette neuf, par extraction des crayons contenus dans un assemblage endommagé, alors que les éléments présentant une radioactivité élevée restent immergés dans l'eau à une profondeur suffisante pour assurer la protection biologique des opérateurs.

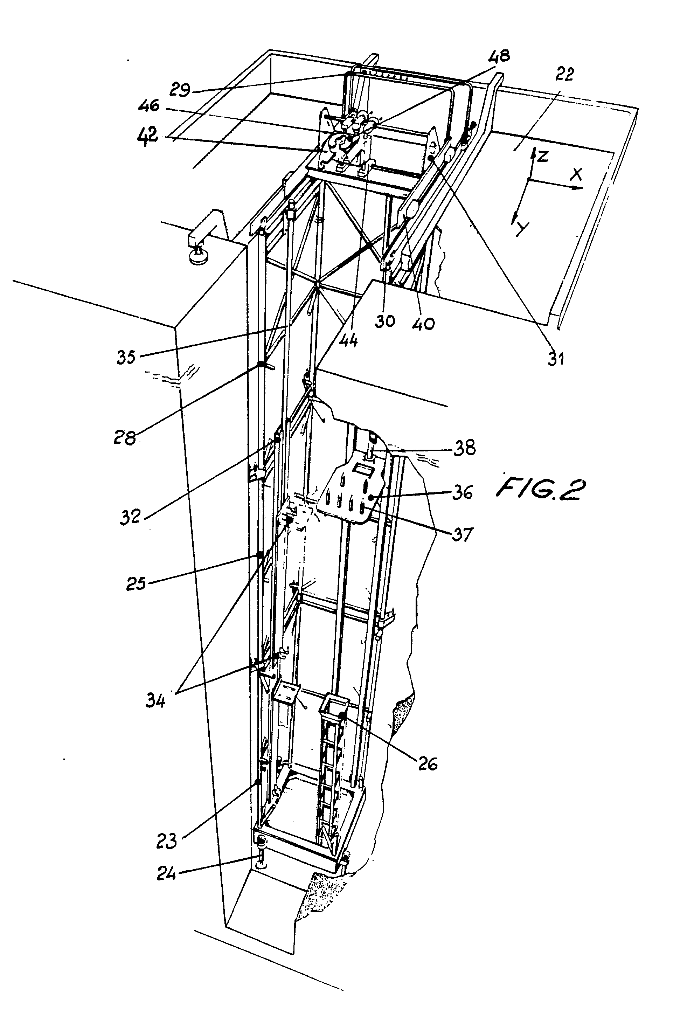

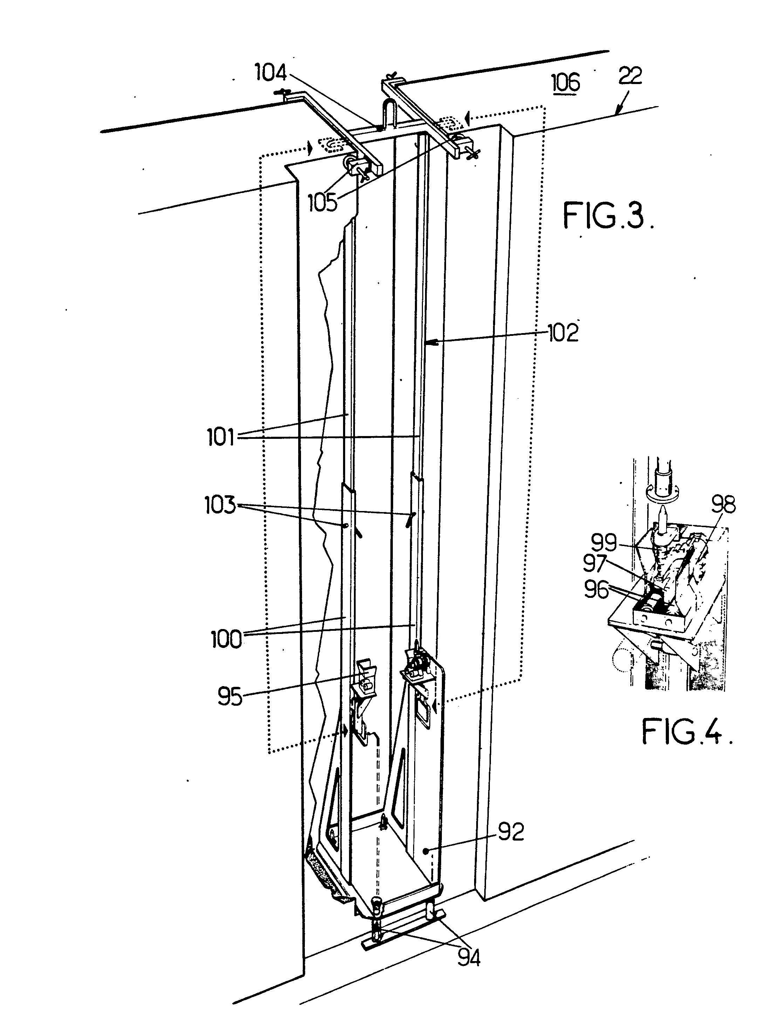

Dans la pratique, l'installation sera en général montée sur la piscine d'évacuation du combustible usé provenant d'un réacteur nucléaire. On peut la considérer comme constituée des ensembles principaux suivants, qui seront successivement décrits:
- une station de réparation, dont la constitution générale apparaît sur la figure 2, ayant un châssis fixe posé au fond de la piscine de désactivation, équipé d'un ascenseur de déplacement d'alvéoles de réception d'assemblages entre un niveau haut et un niveau bas ainsi que de mécanismes de commande,
- un dispositif de retournement d'assemblages, dont la constitution générale est montrée en figure 3, dont le mécanisme d'entraînement en rotation est montré à grande échelle en figure 4,
- des outils de manutention destinés à intervenir sur les alvéoles retournables,
- des outils de démontage d'embout inférieur d'assemblage, qui peuvent, suivant le cas, se limiter à des outils adaptés à un assemblage classique ou se répartir en plusieurs jeux destinés à des assemblages de nature différente,
- un dispositif de transfert des crayons depuis un assemblage contenu dans un alvéole à un squelette contenu dans un autre alvéole,
- des outils de mise en place d'embout sur le nouveau squelette, dont certains, destinés à un assemblage à embouts démontables, peuvent être du même genre que creux déjà décrits dans la demande de brevet EP-A-0 109 902.

La station de réparation montrée en figure 2, permet tout à la fois d'assurer la reconstitution d'assemblages et le remplacement de crayons par le processus décrit et revendiqué dans la demande de brevet EP-A-0 109 902, moyennant l'emploi d'un outillage convenable. Cette station comporte un châssis 20 en treillis, de forme parallélépipédique, posé sur le fond du compartiment d'évacuation du combustible irradié dans la piscine de désactivation 22. Pour en faciliter la manutention, le châssis peut être constitué de plusieures tronçons assemblés. Dans le cas illusté en figure 1, le châssis comporte un tronçon inférieur 23 muni de pieds de dépose 24 réglables en hauteur et en position. Dans ce tronçon est placé à poste fixe un alvéole de stockage de crayons 26 destiné à recevoir un ratelier (non représenté) où les crayons sont répartis suivant la même disposition que dans un assemblage.

Le tronçon intermédiaire 25, raccordé au tronçon inférieur par des moyens mécaniques de mise en place et de verrouillage, est ouvert sur une de ses faces latérales pour permettre l'introduction des assemblage dans la station de réparation. Il est raccordé par des moyens mécaniques au tronçon supérieur 28 qui est également ouvert sur une de ses faces latérales. A la partie supérieure de ce tronçon 20 est placé un support 29 d'accrochage des outils d'intervention sur les assemblages, Le tronçon supérieur 28 porte encore des rails 30 de circulation d'un jeu de chariots 31 de positionnement des outils.

Les trois tronçons portent chacun une fraction du chemin de roulement d'un ascenseur 32. Cet ascenseur est destiné à déplacer un alvéole à combustible entre un niveau bas, pour permettre l'introduction d'un assemblage dans l'alvéole et son évacuation, et un niveau haut, pour permettre d'intervenir sur l'embout d'assemblage placé en haut. L'ascenseur 32 comporte deux points 34 d'accrochage d'alvéoles, situés l'un au dessus de l'autre. L'ascenseur 32 représenté est muni d'une perche de manoeuvre 35 dirigée vers le haut, permettant de déplacer l'ascenseur à l'aide un organe extérieur tel que le palan d'un pont roulant. La perche 35 permet également de verrouillier l'ascenseur en positions haute et basse.

Le châssis 20 comporte encore, dans son tronçon intermédiaire 25, des rails verticaux de déplacement d'un chariot portant un stand 36 de réception des masques de guidage des outils, masques qui seront décrits plus tard. Pour cela ce stand, 36 est muni de pions en saillie vers le haut 37. Ce stand sera généralement de dimensions suffisantes pour qu'il offre un emplacement de réception une boîte (non représentée) d'évacuation d'éléments irradiés, par exemple de douilles filetées de fixation d'embouts. Le chariot du stand 36 peut être muni d'une perche déconnectable 30 permettant de déplacer le chariot à l'aide d'un palan de pont roulant et d'immobiliser le chariot.

Le jeu de chariots 31 porté par le tronçon supérieur 28 permet de réaliser des mouvements suivant des directions orthogonales X, Y et Z. Ce jeu de chariots sert à positionner de façon précise les outils lors des phases de travail sur les crayons, alors que l'ascenseur est en position basse, ou sur les embouts, alors que l'ascenseur est en position haute. Ce jeu de chariots est utilisable aussi bien lors d'opérations de reconstitution d'assemblage par le procédé suivant la présente invention qu'en vue d'opération de remplacement de crayons du genre décrite dans la demande de brevet EP-A-0 109 902.

Le chariot inférieur 40 est déplaçable suivant la direction Y sur les rails 30 fixés au tronçon supérieur 35. Il possède un platelage d'accès du personnel, pour permettre à ce dernier de travailler à l'aide des outils. Ce chariot 40 porte un guide 42 destiné à recevoir les colonnes 117 de l'outil de transfert des crayons qui sera décrit plus loin.

Le chariot 40 porte les éléments d'entraînement et de guidage du chariot 44 déplaçable suivant la direction X. Enfin un troisième chariot 46 est prévu pour être déplaçable sur une distance courte dans la direction 2, sur le chariot 44. Ce chariot peut circuler sur des arbres courts prévus sur le chariot X. Il comporte une platine support 40 destinée à recevoir l'outil à positionner. Grâce à la course verticale qu'il offre, il peut être utiliser pour emboîter des éléments de guidage prévus sur l'outil utilisé et sur l'élément manipulé par l'outil. Par exemple cette course verticale peut permettre l'accostage de pions inférieurs prévus sur un outil d'extraction (par exemple celui montré sur les figures 26 à 28 de la demande FR-8 219 162) dans les réglettes de l'alvéole de maintien de l'assemblage, sans qu'il soit nécessaire de faire intervenir un pont roulant supportant l'outil.

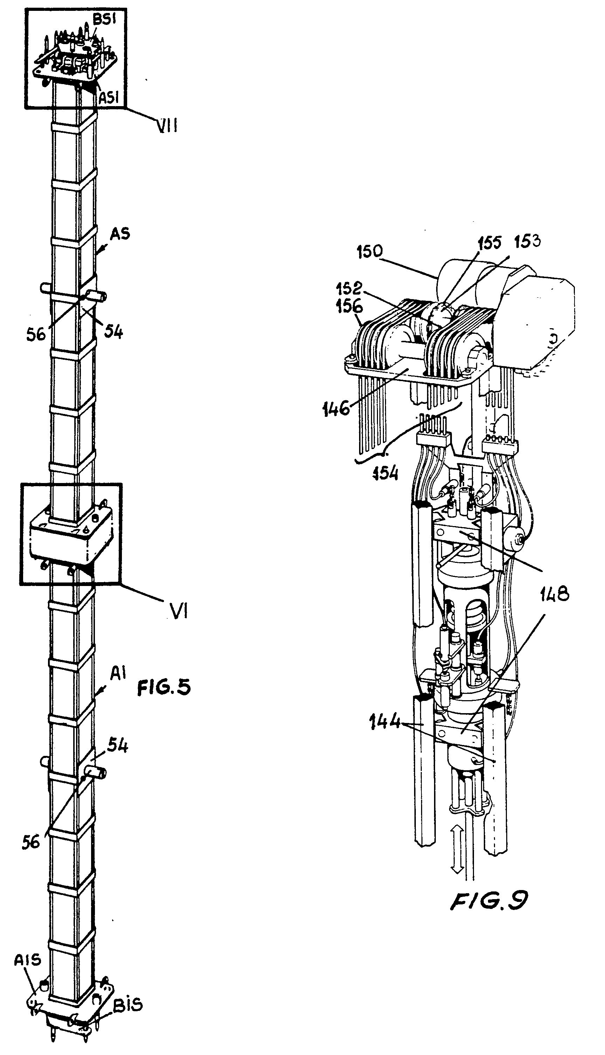

L'ascenseur 32 est prévu pour recevoir deux alvéoles superposés, dans la disposition montrée en Figure 5. L'alvéole supérieur AS contient initialement un squelette démuni de ses embouts. L'alvéole inférieur AI reçoit l'assemblage, démuni de son embout inférieur, dont les crayons sont à extraire.

Les deux alvéoles ont la même constitution générale, permettant de les accrocher à l'ascenseur 32 et de les basculer de 180° à l'aide du dispositif de retournement des Figures 3 et 4.

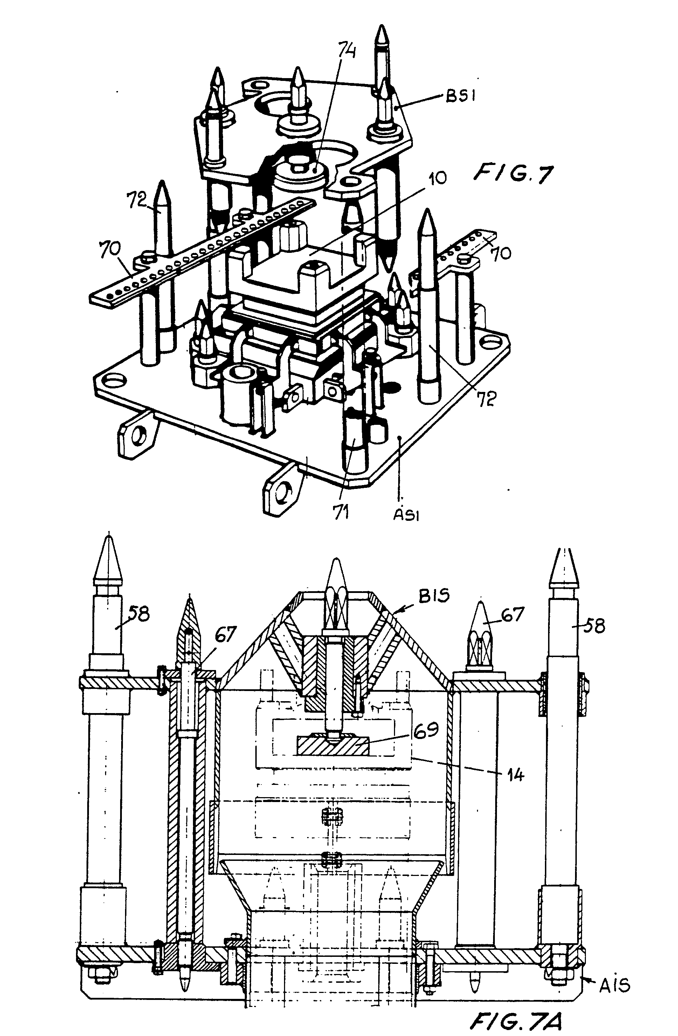

Chaque alvéole a une structure mécano-soudée à quatre cornières d'angle entretoisées par des ceintures. Au milieu de chaque alvéole sont fixés deux renforts 54 munis chacun d'un demi-axe 56 de pivotement. Deux platines sont fixées par boulons aux extrémités de la structure de chaque alvéole. Ces platines sont désignées, sur la Figure 5, par ASS et ASI pour l'alvéole supérieur (une platine étant considérée comme inférieure si elle se trouve disposée du côté de l'embout inférieur de l'assemblage contenu dans l'alvéole et réciproquement). Les platines de l'alvéole inférieur sont désignées de façon similaire AII et AIS. Les platines permettent de manipuler l'alvéole, de le mettre en place et de l'obturer à l'aide de bouchons tels que les bouchons BIS et BSI qui apparaissent sur les Figures 5, 7 et 7A. Les platines permettent également de centrer un assemblage ou un squelette dans l'alvéole et de positionner les outils d'intervention sur l'assemblage.

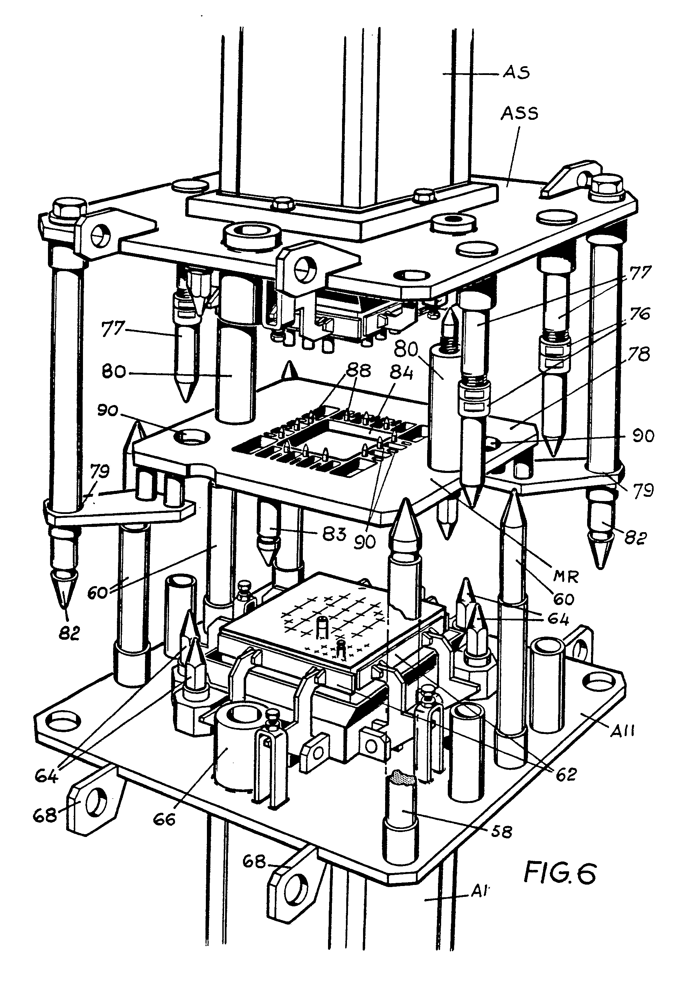

Dans la pratique, la platine AII située du côté embout inférieur d'assemblage sur l'alvéole inférieur AI (Figure 6) est équipée de deux colonnes à gorge 58 permettant de manipuler l'alvéole à l'aide de l'outil qui sera décrit plus loin. Les colonnes 58 servent également à placer le bouchon d'extrémité correspondant (non représente sur les Figures). Trois autres colonnes 60 permettent de centrer les outils d'intervention sur l'assemblage contenu dans l'alvéole AI. Quatre patins 62, pouvant être rapprochés ou écartés, à l'aide d'un mécanisme à roue et vis sans fin, à partir d'un carré 64 manoeuvrable à l'aide d'une perche, sont prévus pour centrer l'assemblage dans l'alvéole et le libérer. Deux bagues de centrage 66 qui sont portées par la platine permettent d'accrocher l'alvéole AI dans la station de réparation montrée en Figure 2. Des plats 68 soudés sur le bord de la platine et percés de trous alignés permettent de manipuler les platines équipées pour des opérations autres que de réparation ou de reconstitution.

La platine AIS (Figure 7A) située du côté embout supérieur de l'assemblage contenu dans l'alvéole AI, est équipée des mêmes accessoires que la platine AII désignés par les mêmes numéros de référence, si ce n'est qu'elle est démunie de patins de centrage d'assemblage.

Les platines sont prévues pour recevoir des bouchons, désignés par BIS et BII, sur l'alvéole inférieur. Ces bouchons retiennent l'assemblage irradié lors du retournement de l'alvéole AI qui le contient. Le bouchon BII situé du côté de l'embout inférieur comporte en son centre un patin non réglable de butée axiale de l'assemblage de combustible. Il est muni de deux colonnes à gorge permettant de le manipuler et il est percé de deux trous de positionnement sur les colonnes de la platine AI.

Le bouchon BIS situé du côté de l'embout supérieur est équipé, comme le précèdent, de deux colonnes de manutention, de deux vis de fixation 67 et de deux trous de positionnement. Son patin 69 est monté à l'extrémité d'une vis manoeuvrable à distance sous eau à l'aide d'une perche, de façon qu'il soit possible de bloquer axialement l'assemblage et d'éviter des déplacement axiaux intempestifs.

L'alvéole supérieur AS comporte des platines d'extrémité légèrement différentes de celles de l'alvéole inférieur AI. La platine ASI (Figure 7) se différencie de la platine AII en ce qu'elle comporte deux réglettes 70 disposées de part et d'autre de son ouverture carrée, réglettes destinées à positionner les colonnes du chariot inférieur de l'outil dextraction et de remplacement des crayons, montré en Figures 26 à 28 de la Demande EP-A-0 109 902. La platine ASI comporte encore deux colonnes à gorge 71 et trois pions 72 de positionnement de l'outil de transfert des crayons. Le bouchon correspondant BSI est identique au bouchon BII, si ce n'est que son patin central 74 est réglable longitudinalement (Figure 7).

Enfin, la platine ASS située du côté de l'embout supérieur d'assemblage (Figure 6) est similaire à la platine ASI. Mais elle ne possède pas de réglette; elle est munie d'une bague de butée réglable 76 sur chacune des trois colonnes 77 de positionnement de l'alvéole supérieur AS sur l'alvéole inférieur AI. Ces bagues permettent de régler la position relative des alvéoles lorsqu'elles se trouvent dans la station de réparation.

Il n'est pas nécessaire de prévoir un bouchon à extrémité supérieuré (c'est-à-dire du côté supérieur d'assemblage) pour l'alvéole AS. Mais, en contrepartie, l'alvéole est prévu pour être muni d'un masque de retenu MR (Figures 5 et 6) ce masque a pour fonctions:

- de constituer une butée axiale du squelette d'assemblage contenu dans l'alvéole AS lors du retournement de celui-ci,

- de transmettre le poids du squelette et des crayons qui y sont introduits lors de la reconstitution d'assemblage, tout en laissant la pince de reconstitution libre d'accéder à tous les crayons contenus dans l'alvéole inférieur AI.

- d'aligner de façon précise la partie inférieure du squelette contenu dans l'alvéole supérieur AS avec le squelette de l'assemblage contenu dans l'alvéole inférieur AI.

Le masque MR (figure 6) comporte une plaque 78 munie de deux trous 79 permettant de le centrer sur les deux colonnes de manutention 82 de l'alvéole AS. Cette plaque est fixée sur la platine par deux vis 80. Sur la plaque 78 sont fixées deux colonnes à gorge de manutention 83, au même écartement que les colonnes de manutention des bouchons. L'ouverture carrée ménagée au centre de la plaque 78 donne accès aux crayons situés au centre de l'assemblage contenu dans l'alvéole inférieur AI. Autour de cette ouverture carrée centrale 84 sont ménagées des ouvertures rectangulaires séparées par des ligaments 86 prévus pour servir d'appui aux extrémités des tirants du squelette d'assemblage contenu dans l'alvéole AS. Des pions 88 fixés à la plaque débordent de part et d'autre de cette dernière. Ils sont prévus pour s'engager dans les tirants périphériques, constitués par des tubes guides des deux assemblages lors des opérations de reconstitution. Deux trous 90 ménagés dans la plaque permettent d'accéder aux carrés 64 de manoeuvre des patins de serrage 62 de la platine AII.

Le dispositif de retournement d'assemblage montré en figures 3 et 4 est prévu pour recevoir des alvéoles du genre qui vient d'être décrit. Pour des raisons de simplicité le dispositif donné à titre d'exemple est à commande manuelle. Ce dispositif doit permettre de:

- maintenir un alvéole contenant un assemblage irradié sous une hauteur d'eau compatible avec la protection des opérateurs,

- basculer l'alvéole de 180° autour d'un axe horizontal en assurant la verticalité de l'alvéole en assurant la verticalité de l'alvéole dans les positions initiale et finale.

Le dispositif montré en figure 3 est en deux parties assemblées ce qui facilite son stockage et permet de l'adapter à des profondeurs diverses. De plus il constitue un ensemble amovible, insérable dans le goulet d'accès à la fosse d'évacuation du combustible.

La partie inférieure du dispositif comprend essentiellement un bâti mécanosoudé 92 reposant sur le fond du goulet par des patins 94 réglables pour rendre le bâti vertical. Ces patins 94 sont manoeuvrables, depuis un plancher de service situé au dessus de la piscine, par une perche agissant sur des carrés de manoeuvre dont sont munis les patins. Le bâti comprend deux supports latéraux 95 de réception de l'axe de rotation de l'alvéole à basculer. Chaque support 95 est équipé de deux galets 96 (figure 4) permettant un basculement facile de l'axe qui est entraîné en rotation par un arbre 97 sur lequel est goupillée une roue 98 entraînée par une vis 99. Une perche permet d'entraîner un carré de manoeuvre don t est munie la vis 99, à partir du plancher de service.

Le bâti 92 comporte encore deux guides tubulaires verticaux dirigés vers le haut 100, destinés à recevoir les montants 101 d'une potence 102.

La potence 102, destinée à permettre la manutention du dispositif de retournement, comporte les montants 101, qui peuvent être fixés aux guides 100 dans plusieurs positions à l'aide de broches 103, et une traverse 104 soudée aux montants. Plusieurs trous peuvent être prévus pour les broches 103 pour permettre de raccourcir la hauteur totale du dispositif de retournement lors des manutentions hors de la piscine. Sur la traverse 104 sont fixées deux fourches munies chacune de deux patins de serrage 105 destinées à s'appuyer de part et d'autre du muret 106 délimitant le goulet. Ces patins constituent une sécurité évitant tout renversement du dispositif lors des manoeuvres de retournement d'un assemblage.

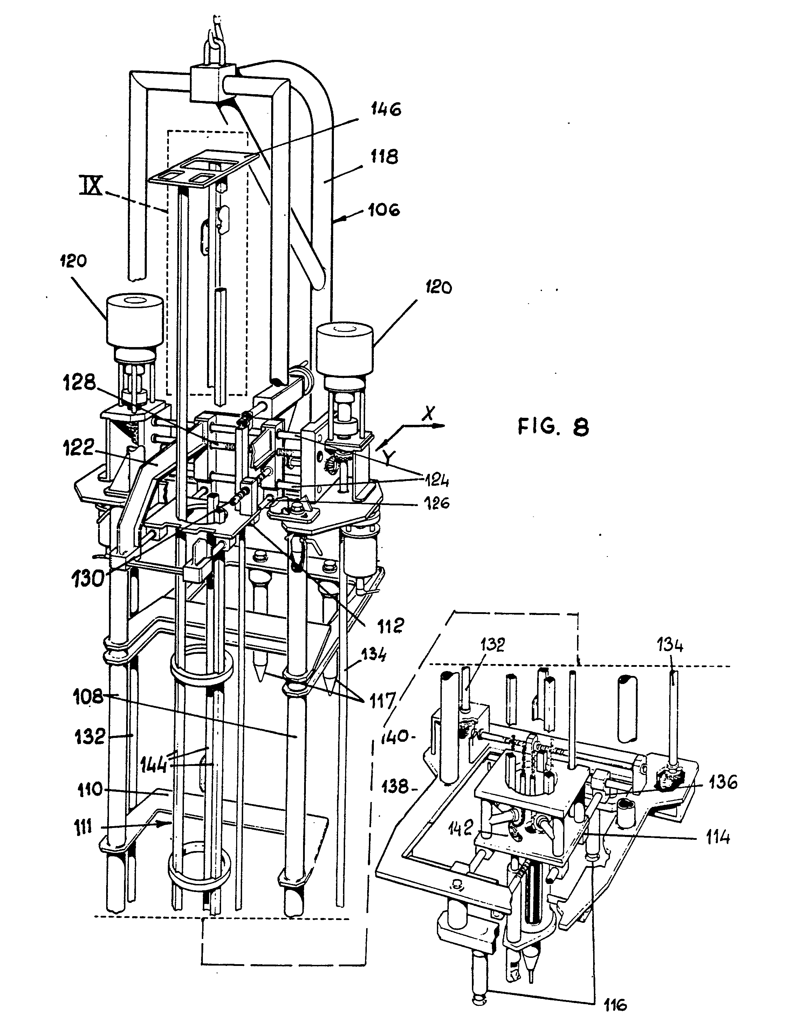

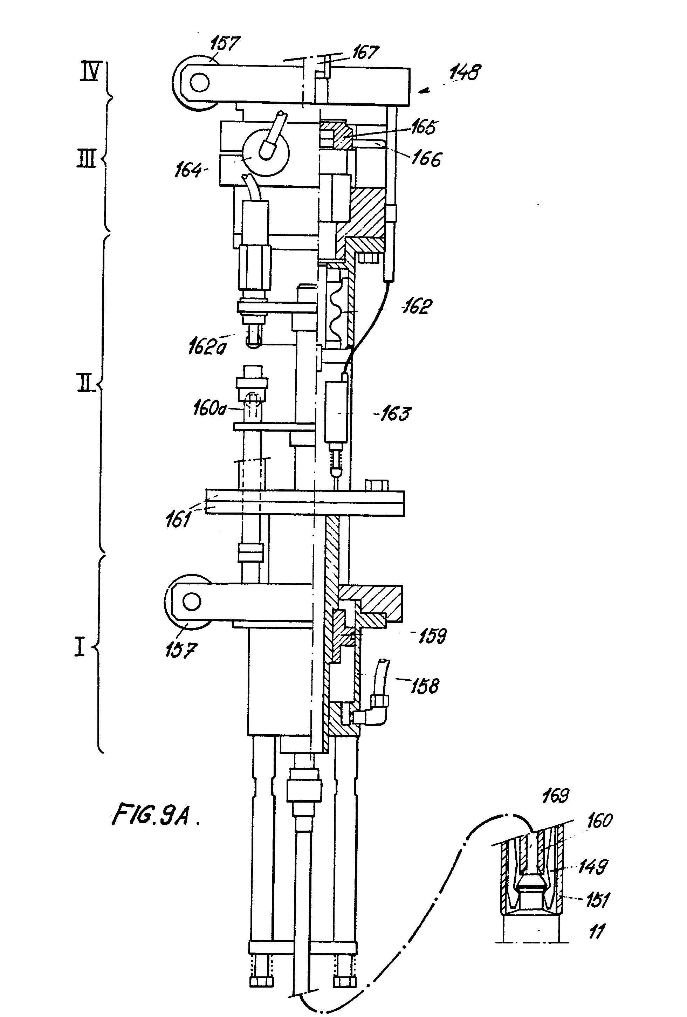

Le tronçon supérieur du châssis de la station (Figure 2) est prévu pour recevoir notamment un outil 106 de transfert des crayons, montré schématiquement en figures 8 et 9. L'outil 106 est destiné à être amené au-dessus des alvéoles lorsque ceux-ci sont placés à la station de réparation, à extraire par traction les crayons sains du squelette endommagé et à les réintroduire dans le squelette neuf situé au-dessus.

L'outil 106 comporte une partie mécanique partiellement immergée dans la piscine et un ensemble électronique et pneumatique (non représenté) placé hors de la piscine et destiné à actionner les éléments mobiles de l'outil.

La partie mécanique peut être regardée comme constituée d'un châssis support, d'un attelage mobile verticalement muni à son extrémité inférieure d'une pince de préhension des crayons et d'une cage de guidage de l'attelage mobile au cours de ses déplacements verticaux.

On voit sur la Figure 8 que le châssis support comporte une ossature constituée de deux montants tubulaires verticaux 108 reliés de place en place par des étriers 110. Les deux montants 108 sont fixés à leurs extrémités sur l'embase de la table à mouvements croisés supérieure 112 et l'embase de la table à mouvements croisés inférieure 114. L'ossature peut reposer sur l'alvéole AS par l'intermédiaire de colonnes creuses de supportage 116 qui s'engagent sur les pions de positionnement 72 solidaires de l'embase ASI, de façon à fixer la position en plan et hauteur du châssis support dans la station de réparation. Deux pions de retenue 117 solidaires des colonnes 108 permettent de centrer l'outil sur le tronçon supérieur de la station.

Un arceau 118 fixé sur l'embase de la table supérieure 112 et sur une entretoise des montants 108, permet de manipuler l'outil à l'aide d'un palan.

La table à mouvements croisés supérieure est destinée à ajuster la position horizontale de la cage de guidage 111. Cette table est située au-dessus du niveau de l'eau dans la piscine lors de la mise en oeuvre de l'outil. Elle porte deux moteurs à courant continu 120 à vitesse variable respectivement destinés à actionner les plateaux déplaçables suivante la direciton X et la direction Y.

Le plateau déplaçable suivant la direction X comprend deux arcades 122 coulissant sur des rails 124 et portant chacune une extrémité des rails 126 de guidage du plateau mobile en Y. Les axes des deux rails 124 et de la vis 128 d'entraînement du plateau sont dans un même plan vertical.

Le plateau déplaçable suivant la direction Y comporte des rainures de maintien de la cage de guidage 111 qui sera décrite plus loin. L'entraînement du plateau suivant la direction Y peut être assurée par un mécanisme de transmission quelconque. Dans le mode de réalisation illustré en figure 8, le mécanisme de transmission comporte une tige carrée d'entraînement en rotation d'une vis a billes 130, qui coulisse dans son pignon d'entraînement (non visible sur la figure) solidaire en translation du plateau de déplacement suivant la direction X.

La table à mouvements croisés inférieure 114 doit reproduire les mouvements de la table supérieure et elle a donc la même configuration générale. Les déplacements de ses plateaux suivant les directions X et Y sont commandés à partir des moteurs 120 par des arbres 132 et 134, pour les directions X et Y respectivement. Le plateau 136 déplaçable suivant la direction X est monté coulissant sur deux rails de guidage situés dans un même plan horizontal et fixés sur une embase 138 solidaire des deux montants 108 de l'ossature. Les trois tiges creuses 116 d'appui de l'ossature sur l'alvéole supérieure sont fixées à cette embase. L'entraînement du plateau 136 suivant la direction X s'effectue par un renvoi d'angle et une liaison à vis et écrou à billes 140.

Le plateau 142 de déplacement suivant la direction Y est monté coulissant sur des rails appartenant au chariot X. Il supporte la cage 111 de guidage de l'attelage mobile et comporte un guide de pince.

La cage 111, qui sert de guide vertical à l'attelage mobile et à la pince de manutention des crayons, est fixée sur le plateau de déplacement en Y 142 de la table a mouvements croisés inférieure 114 et elle est guidée dans le plateau correspondant de la table supérieure 112. Cette cage se compose de trois rails 144 régulièrement répartis à 120° l'un de l'autre autour d'un axe, reliés par des entretoises circulaires. L'extrémité supérieure des rails 144 porte une platine 146 de réception du mécanisme de motorisation de l'attelage mobile. Ce mécanisme n'a pas été illustré sur la Figure 8. Il apparaît, avec la partie supérieure de l'attelage mobile 148, sur la Figure 9. Ce mécanisme de motorisation comporte un moteur électrique à courant continu à vitesse variable et réversible 150 qui entraîne un arbre 152 par l'intermédiaire d'un réducteur et d'un limiteur de couple. L'arbre 152 porte des roues dentées 153 d'entraînement de chaînes 155 de déplacement de l'attelage mobile 148 suivant la direction verticale (direction Z) ainsi que des roues à gorge de guidage de câbles électriques et de flexibles pneumatiques 154 reliés à l'attelage mobile. Les câbles et flexibles passent également sur des roues à gorge 156 montées à la partie avant de la platine 146, constituant renvoi vers des systèmes de compensation de longueur comportant, de façon classique, des poulies montées sur une chape mobile.

L'attelage mobile 148 est destiné à donner les différents mouvements requis à la pince 149 de préhension des crayons et à ses composants internes. Il supporte les organes de surveillance de ces mouvements et des efforts appliqués au crayon.

La pince 149 constitue la partie inférieure de l'attelage mobile. Elle est conçue pour pouvoir tranverser le squelette neuf. Elle comporte (Figure 9A) un tube de traction relié au châssis de l'attelage mobile, portant l'organe de préhension des crayons, constitué de quatre lames élastiques dont le profil épouse la forme du bouchon des crayons 11 à transférer. Ces lames sont prévues pour être verrouillées dans la gorge par descente d'un fourreau extérieur 151. Dans l'axe de la pince est placé un palpeur 160, qui permet de vérifier que le bouchon de crayon est correctement engagé dans l'extrémité de la pince, avant verrouillage.

Le châssis de l'attelage mobile 148 (Figures 8, 9 et 9A) comporte un châssis dont les deux plaques d'extrémité sont munies chacune de trois galets 157 de guidage sur les rails 144. Ce châssis est suspendu aux deux chaînes 155, par inermédiaire d'équilibreurs de tension non représentés.

L'étage inférieur I de l'attelage 148 porte les moyens de verrouillage de la pince 149 de préhension des crayons 11. Le fourreau 151 de fermeture de la pince est relié au cylindre 158 d'un vérin à double effet dont le piston 159 est solidaire du châssis. Des ressorts de progressivité sont interposés entre les colonnes et un plateau relié au fourreau, pour autoriser les débattements nécessaires à la surveillance des efforts.

L'étage II de l'attelage mobile est destiné à la surveillance des mouvements de la pince et des efforts. Il comporte un axe 160a, solidaire du cylindre 158, qui traverse des brides 161 du châssis de l'attelage. L'extrémité de l'axe 160a actionne des contacts de fin de course, dont un seul 162a est représenté, de contrôle du mouvement de verrouillage et de déverrouillage de la pince. Ces contacts sont placés dans des circuits de la logique de commande.

Un soufflet 162 permet de contrôler les efforts exercés sur les crayons 11 à transférer. Ces variations de longueur sont suivies par un capteur de déplacement 163, par exemple inductif. Il est fixé d'une part au tube de traction de la pince, d'autre part, au châssis de l'attelage.

L'étage III est destiné à assurer l'ouverture forcée de la pince après déverrouillage, afin de libérer le crayon, en cas d'anomalie alors que le crayon se trouve au niveau haut où il doit être libéré. Dans ce but, l'étage III comporte un vérin à double effet 164 d'entraînement d'une noix rotative 165 munie d'une rainure verticale. Cette rainure est traversée par un doigt 166 solidaire du palpeur. La mise en action du vérin 164 fait tourner le palpeur 160 dont l'extrémité inférieure est munie de quatre excroissances (non représentées) qui, en position normale, se logent entre les lames élastiques de la pincé.

L'étage IV est destiné à la surveillance de la position de la pince et de la position relative du crayon. Il comporte un capteur 167 qui contrôle la position de la tige 169 du palpeur, tige qui repose sur l'extrémité du crayon en cours de transfert. Ce capteur 167 est fixé sur la plaque supérieure du châssis de l'attelage 148.

Les outils de manipulation destinés à intervenir sur les alvéoles comportent un outil OMA de manutention des alvéoles, un outil OMB de manutention des masques et bouchons, et des perches de réglage et de manoeuvre.

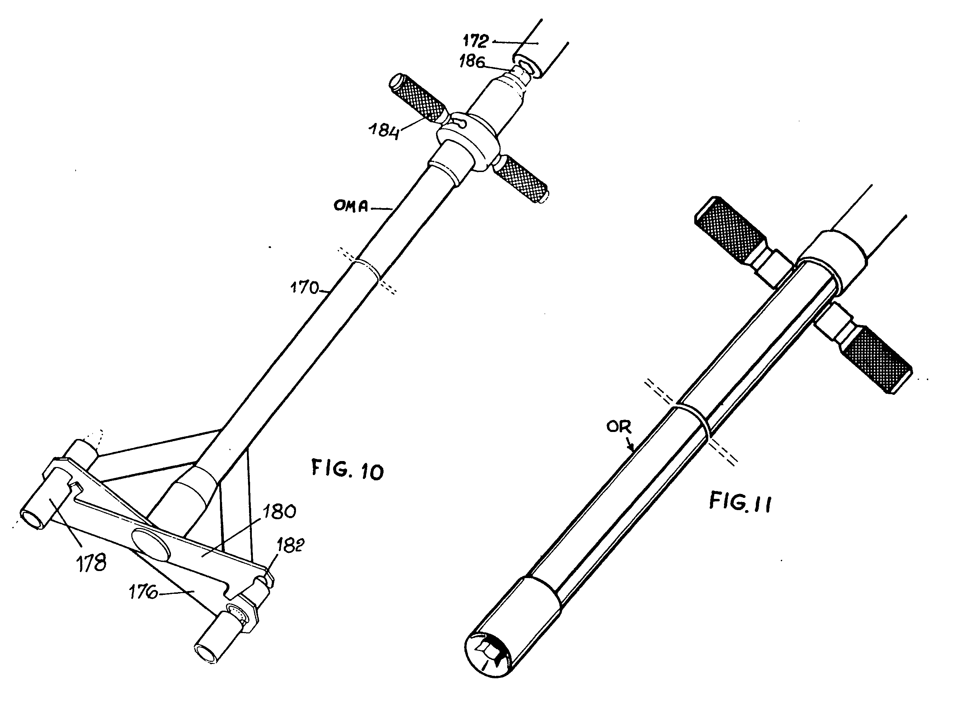

Les outils OMA et OMB ont une constitution similaire. L'outil OMA, dont une vue d'ensemble est donnée en Figure 10, sert à la manutention des alvéoles retournables AI et AS à partir d'un pont roulant. Il est constitué de deux tronçons

- le tronçon inférieur 170, qui se verrouille sur les deux colonnes à gorges 58 ou 82 prévues sur chacune des platines d'extrémité des alvéoles,

- le tronçon supérieur 172, qui est une rallonge interposée entre le tronçon supérieur et le crochet du pont, pour interdire la mise hors eau éventuelle d'un alvéole chargé du fait que sa longueur est telle que, lorsque le crochet du pont est en butée haute, il subsiste une nappe d'eau de protection au-dessus de l'assemblage.

Le tronçon 170 est similaire à l'outil représenté en Figure 7 de la demande 8 219 162 à laquelle on pourra se reporter. Il est composé de deux tubes coaxiaux susceptibles de tourner l'un par rapport à l'autre entre une position permettant l'engagement de l'outil sur les colonnes (position représentée en Figure 10) et une position de verrouillage. A l'extrémité inférieure du tube externe est fixée, par exemple par soudage, une plaque 176 munie de deux guides cylindriques verticaux 178 destinés à coiffer les colonnes 58 ou 82. Dans chaque guide 178 est ménagée une lumière horizontale, sur à peu près les trois-quarts du développement angulaire du guide, au niveau de la gorge horizontale dans la colonne de manutention à saisir.

A l'extrémité inférieure du tube intérieur est fixée, par exemple par soudage, une pale 180. Lorsque le tube intérieur est en position de verrouillage, deux encoches 182 ménagées dans la paie 180 viennent s'engager, à travers les lumières des guides 178, dans les gorges horizontales des colonnes et solidarisent ainsi l'outil OMA de l'alvéole à manipuler.

Lorsqu'au contraire le tube intérieur est dans la position montrée en Figure 10, la paie 180 libère le trajet des colonnes de manutention et permet d'engager l'outil ou de le dégager.

Dans le cas illustré sur la Figure 10, les tubes peuvent être orientés l'un par rapport à l'autre à l'aide d'un jeu de deux poignées 184.

Le tronçon supérieur 172 est constitué par une perche tubulaire munie à son extrémité haute d'un anneau de manutention (non représenté). A son extrémité basse, la perche comporte un trou carré destiné à loger un carré terminal 186 du tronçon 170 pour assurer une solidarisation en rotation. L'extrémité basse du tronçon supérieur comporte de plus une bague taraudée de liaison avec le tronçon inférieur.

L'outil OMS de manutention des masques et bouchons a la même constitution que l'outil OMA, si ce n'est que l'écartement des guides 178 est plus faible, car l'écartement entre axes des colonnes à gorge, tel les que 83, des masques, est plus faible que sur les alvéoles.

L'outil OMB, non représenté sur les Figures, est utilisé pour la manutention sous eau des bouchons d'extrémité d'alvéole et de divers accessoires utilisés dans les opérations de réparation ou de reconstitution.

L'outil OMS peut se limiter à son tronçon inférieur, le tronçon supérieur étant commun avec l'outil OMA.

Les perches de réglage et de manoeuvre sont utilisées pour agir sous eau sur les différents carrés de manoeuvre et de réglage, par exemple:

- les carrés des patins 94 du dispositif de retournement,

- le carré d'actionnement du mécanisme de retournement d'alvéole sur le dispositif de retournement,

- les carrés de manoeuvre des systèmes à roue et vis sans fin de centrage et d'assemblage dans les alvéoles,

- les carrés de serrage et de desserrage des vis 67 de fixation des bouchons d'extrémité d'alvéoles sur leur platine.

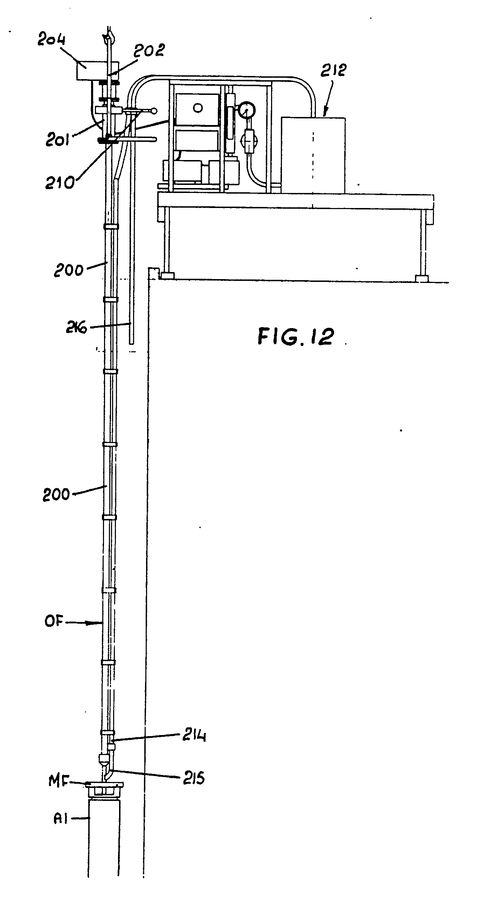

Plusieurs perches de longueur différente seront en général prévues. La Figure 11 montre à titre d'exemple la partie inférieure d'une telle perche constituant outil de réglage OR. Cet outil est une simple clé à tube de forme correspondant à celle d'un carré de manoeuvre. La perche peut être en plusieurs tronçons raccordés par bagues taraudées, comme dans le cas de l'outil OMA.

Les outils de démontage d'embouts inférieurs seront fonction de la nature des moyens de liaison entre l'embout inférieur de l'assemblage endommagé et les tirants. On décrira maintenant les outils à utiliser dans le cas d'un embout inférieur d'assemblages combustibles considérés comme standard, dont l'embout inférieur est, comme illustré sur la Figure 1, fixé par des vis 16 à tête fendue, rendues indéserrables par adjonction, dans leur fente, de goupilles 17 soudées sur l'embout.

Les outils de démontage comprennent, d'une part, des outils proprement dits d'intervention, c'est-à-dire des éléments actifs, d'autre part, des masques destinés à guider ces outils et adaptés chacun à un outil correspondant. Les outils de démontage comportent, pour l'intervention sur un assemblage standard du genre montré en Figure 1:

- un outil OF de fraisage des goupilles 17 d'immobilisation des vis 16 de fixation de l'embout 13 aux tirants du squelette,

- un masque MF de guidage de l'outil de fraisage sur l'embout inférieur à démonter,

- un outil tournevis TIS pour dévisser les vis de fixation de l'embout,

- un masque MIS de guidage de l'outil tournevis TIS sur l'embout, masque servant également à évacuer les vis,

- un outil poussoir OP pour dégager les vis du masque de guidage.

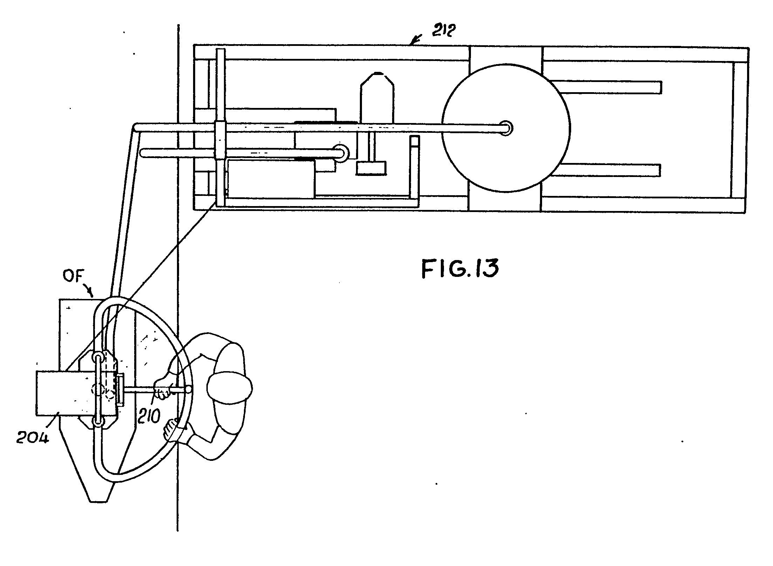

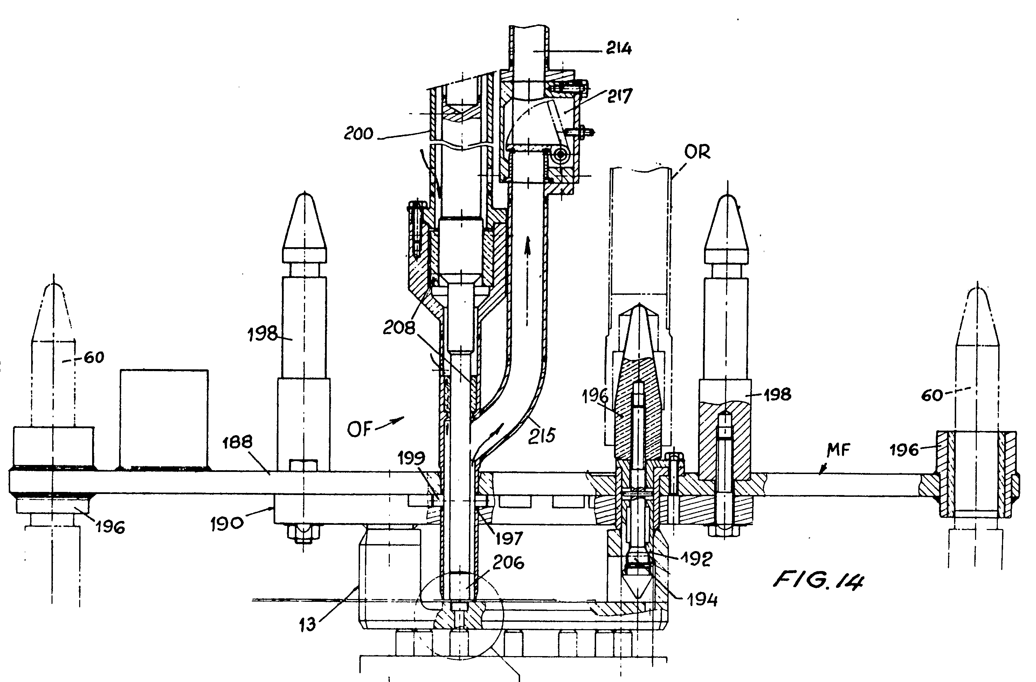

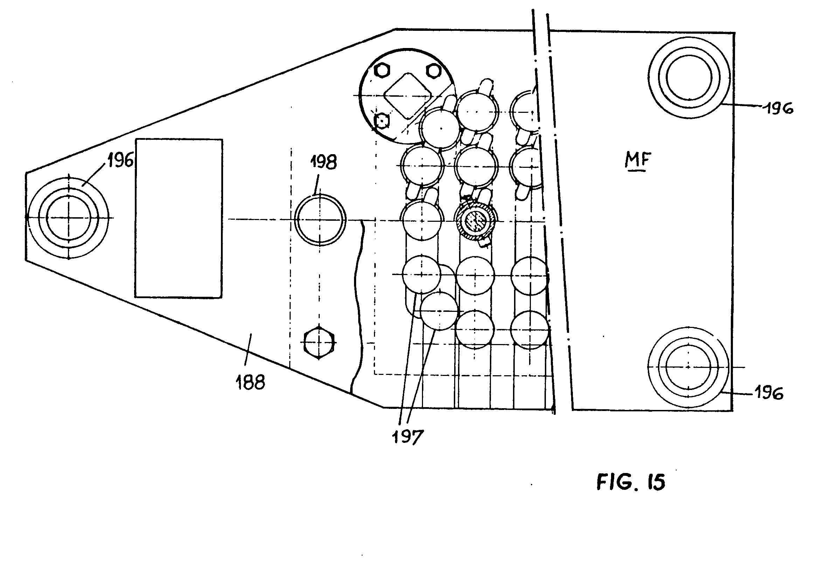

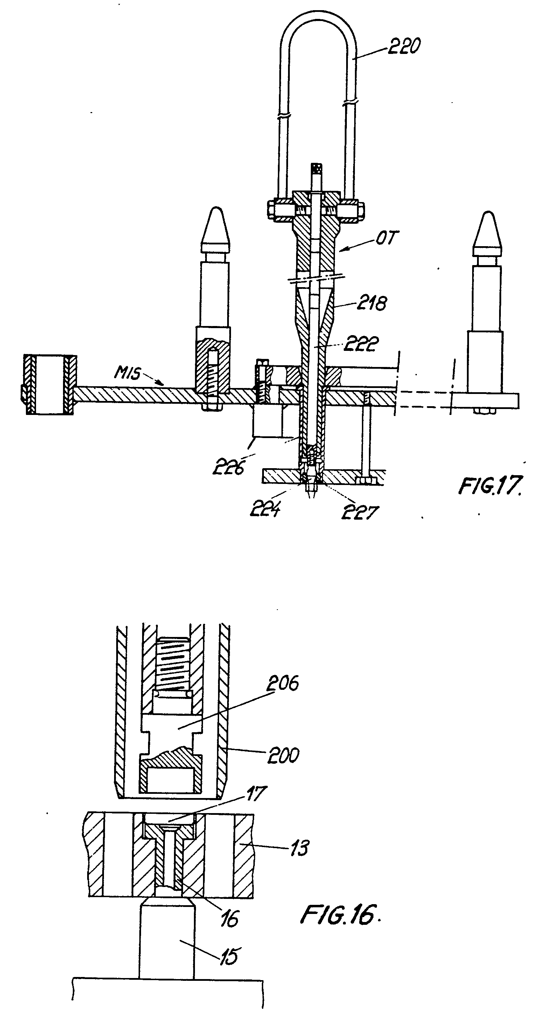

L'outil de fraisage est représenté sur les Figures 12 et 13 accroché à son palan de manoeuvre et en place sur un alvéole inférieur muni du masque MF. Les Figures 14 et 15 font mieux apparaître la structure de la partie basse de cet outil et du masque MF. Enfin, la Figure 16 montre le mode d'action de la fraise de l'outil sur une goupille 17.

Le masque MF de guidage (Figures 14 et 15) a deux fonctions. Il guide l'extrémité inférieure de l'outil de fraisage OF de façon qu'elle soit coaxiale aux vis de liaison entre les tirants 15 et l'embout inférieur 13. Il constitue une butée axiale pour le corps de l'outil, lorsqu'on avance la fraise au fur et à mesure de l'usinage.

Le masque MF se compose d'une platine 188 fixée, par exemple à l'aide de boulons, sur une plaque d'embase 190 destinée à reposer sur les pieds de l'embout 13. L'ensemble platine-embase est traversé par deux douilles fendues 192 expansibles à l'aide de noix coniques 194, afin de permettre le verrouillage du masque MF dans les trous de positionnement d'assemblage qui sont ménagés dans les pieds des embouts standard. Les noix sont actionnables par des carrés de manoeuvre 196 à l'aide de l'outil de manoeuvre OR, représenté en traits mixtes sur la Figure 14.

La platine 188 est munie de douilles 196 destinées à s'engager sur les trois colonnes 60 de la platine inférieure AlI, montrées en traits mixtes sur la Figure 14. Elle est équipée de deux colonnes à gorge 198 permettant de la saisir à l'aide de l'outil de manutention OMS.

L'ensemble platine-embase est percé de vingt-quatre alésages 197 de guidage de l'outil OF. Deux passages en baïonnette débouchent dans chaque alésage de la platine pour permettre l'introduction d'ergots 199 prévus dans l'outil de fraisage pour constituer une butée axiale d'accrochage de l'outil de fraisage OF.

La constitution générale de l'outil OF apparaît sur la Figure 12. Il faut remarquer au passage que le mode d'accrochage de l'outil OF montré sur la Figure 12 est également repris pour la mise en oeuvre des autres outils de démontage et de remontage. L'outil OF, qui constitue typiquement un ensemble tubulaire d'environ 4 m de hauteur, peut être regardé comme comportant un manchon 201 muni d'une anse 202 de suspension au treuil du pont roulant, d'un fourreau 200 pouvant coulisser dans le manchon 201, d'un motoréducteur 204 porté par le fourreau 200 et d'un équipage rotatif entraîné par le moteur et guidé dans le fourreau 200 par des roulements à billes non visibles sur les Figures.

L'équipage rotatif comporte une broche reliée à l'arbre de sortie du motoréducteur 204 par un accouplement à denture (non représenté) et une tige à fraise termina le 206 guidée dans le fourreau par des bagues en bronze 208 (Figure 14). Un levier 210 permet de déplacer le fourreau longitudinalement dans le manchon 201 sur une longueur correspondant à l'avance requise de la fraise pour découper une goupille de blocage.

L'outil de fraisage OF est complété, dans le cas illustré en Figures 12 et 13, par un ensemble de filtration 212 comportant une tuyauterie de prélèvement 214 raccordée à un piquage 215 sur le fourreau, de façon à aspirer les copeaux d'usinage, et une conduite de retour 216. La tuyauterie 214 est rigide et fixée le long du fourreau 200. Elle est munie d'un clapet de pied 217 qui évite la dissémination des copeaux en piscine en cas d'arrêt intempestif du système de pompage. Elle possède en partie haute un coude terminé par un raccord de liaison à une tuyauterie souple de raccordement à l'ensemble de filtration. Il faut remarquer au passage que l'outil de fraisage, comme les autres outils, est mis en oeuvre manuellement, les seuls accessoires électriques étant le moteur d'entraînement de la pompe du système de filtration d'eau et le moteur de l'outil de fraisage.

L'outil tournevis de démontage est représenté sur la Figure 17 en place sur une vis à enlever, son masque de guidage MIS n'étant représenté qu'en partie. Ce masque ne sera pas décrit de nouveau, car il peut être très similaire au masque MF, si ce n'est qu'il est prévu pour permettre l'évacuation des vis après enlèvement de ces dernières.

L'outil tournevis OT comporte un tube extérieur 218 muni d'une anse de manutention 220 et une tige 222 guidée dans le tube 218. L'extrémité supérieure de cette tige présente un épaulement de retenue sur le tube et se termine par un carré de manoeuvre permettant d'appliquer le couple de desserrage à l'aide d'une clé dynamométrique. L'extrémité de la tige est prévue pour recevoir des embouts profilés 224 faisant office de lame de tournevis.

On voit sur la Figure 17 que les trous de guidage de l'outil tournevis dans le masque MIS ne comportent pas, contrairement au masque MF, des rainures baïonnettes. Mais ils sont munis de bagues 226 de réception de manchettes 227 en élastomère qui viennent emprisonner les têtes de vis en fin de dévissage et permettent leur évacuation avec le masque.

Enfin, l'outile poussoir de vis, destiné à dégager simultanément l'ensemble des vis emprisonnées dans les manchettes en élastomère du masque MIS, après évacuation de ce masque, peut se limiter à une perche tubulaire munie d'une anse de manutention, munie à sa partie basse de vingt-quatre pions formant poussoirs: il suffit d'enfoncer les vingt-quatre pions simultanément par abaissement de la perche pour chasser les vis.

Comme les outils de démontage d'embout, les outils de remise en place d'embout devront être adaptés au mode de fixation retenu. On supposera dans ce qui suit que l'embout à remonter est fixé à l'aide de vis présentant une, virole expansible pour immobiliser la vis une fois quelle a été complètement enfoncée.

L'outil tournevis TIA peut être identique à l'outil TIS représenté en Figure 17, si ce n'est que son embout inférieur est adapté au profil de la fente de la vis à serrer.

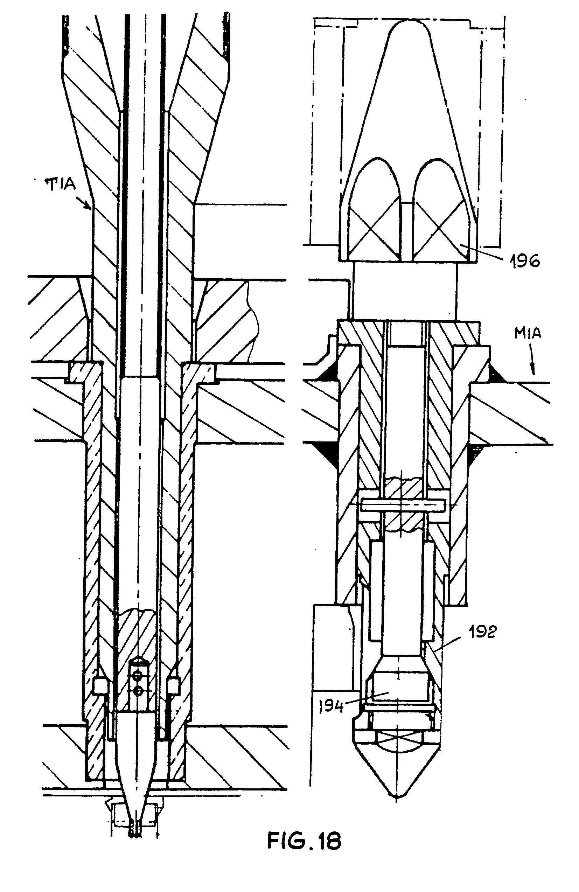

Au cours de son intervention, l'outil tournevis TIA doit être guidé par un masque MIA. Ce masque, dont une fraction est montrée Figure 18, peut être identique au masque MIS, si ce n'est qu'il est dépourvu de manchettes en élastomère qui gêneraient le passage de l'outil d'expansion OEI et qu'il comporte des rainures débouchant dans les trous de guidage pour constituer des butées axiales pour les ergots de l'outil d'expansion.

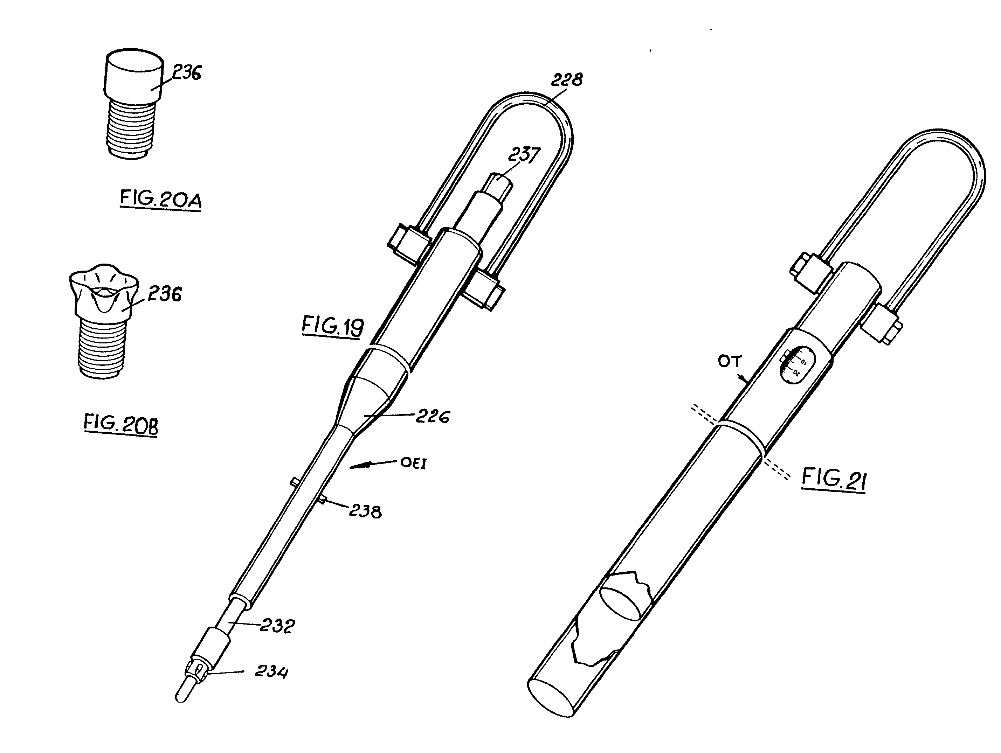

Cet outil d'expansion (Figure 19) est destiné à rendre les vis imperdables et indesserrables par déformation de leur virole dans des logements de l'embout inférieur. Il comporte dans ce but un tube extérieur 226 muni d'une anse de manutention 228. Le tube extérieur présente, à sa partie inférieure, des ergots 238 destinés à servir de butée axiale et circonférentiel le en s'engageant dans les rainures du masque MIA. Dans le tube 226 est montée une tige en deux parties la partie inférieure 232 de la tige porte un mandrin 234 pour sertir les vis en faisant passer leur jupe 236 de la forme indiquée en Figure 20A à la forme indiquée en Figure 20B. La tige est liée en rotation au tube, extérieur 226, de façon à garantir l'orientation du mandrin par rapport aux ergots 230 mais elle peut se déplacer en translation sur une longueur limitée, un ressort non représenté assurant le rappel de la tige en position haute. La partie supérieure de la tige est en appui axial contre la partie inférieure. Elle est reliée au tube extérieur par une liaison vis-écrou commandable à l'aide d'un carré 237. L'application d'un, couple au carré 237 à l'aide d'une clé dynamométrique fait apparaître un effort axial, transmis par un contact plan/sphère, de déformation des jupes ou viroles 236.

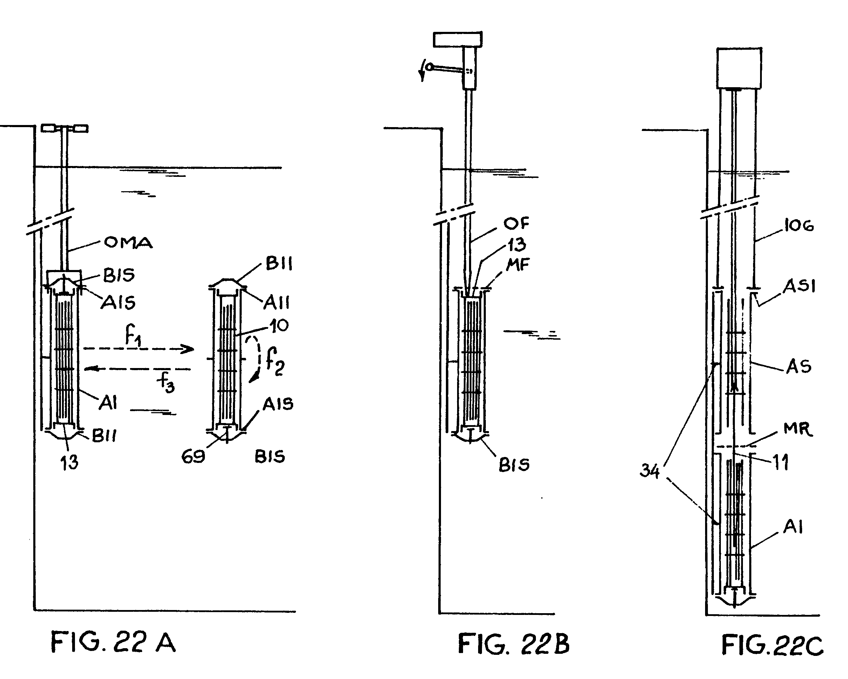

On décrira maintenant, à titre d'exemples et en faisant référence aux Figures 22A-22C, des opérations d'intervention visant à reconstituer un assemblage par transfert, dans un squelette neuf, des crayons d'un assemblage endommagé de type standard.

On se souviendra qu'on appelle bouchon inférieur d'alvéole BSS ou BIS celui qui est situé du côté de l'embout inférieur de l'assemblage contenu dans l'alvéole, et inversement.

Dans l'état initial de l'installation, l'alvéole inférieur Al est déposé en position droite sur l'ascenseur (au niveau inférieur d'accrochage) bouchon BIS supérieur enlevé. L'alvéole supérieur AS neuf est stocké en attente en position inversée, masque de retenue MR en place. Il contient un squelette d'assemblage neuf, sans embouts, calé à l'aide du patin 74. L'assemblage endommagé 10 est amené, à l'aide d'un pont roulant, et déposé dans l'alvéole inférieur Al. Celui-ci est monté au niveau supérieur par l'ascenseur. Son bouchon supérieur est mis en place. L'assemblage 10 est bloqué axialement et calé radialement par action sur les patins.

L'alvéole Al est accroché à l'outil de manutention OMA, transféré à l'aide du pont jusqu'au dispositif de retournement et basculé. Après retournement, l'alvéole est repris avec l'outil de manutention OMA puis placé au niveau inférieur d'accrochage sur l'ascenseur en position haute (flèches $f_1$, $f_2$, $f_3$ sur la Figure 22A).

Le bouchon inférieur BII de l'alvéole inférieur Al est alors retiré pour permettre le démontage de l'embout inférieur 13. Ce démontage implique les opérations suivantes:

- amenée du masque MF à l'aide de l'outil de manutention OMB et dépose sur l'embout inférieur 13 de l'assemblage standard endommagé,

- immobilisation du masque, par expansion de ses deux douilles fendues 192 dans les trous de positionnement de l'embout,

- accostage de l'outil OF de fraisage des goupilles dans un des trous de guidage, et verrouillage des baïonnettes par engagement des ergots 199 (Figure 22B),

- raccordement hydraulique au groupe de pompage 212, mise en route et réglage du débit d'eau,

- fraisage successif de toutes les goupilles 17 au nombre de vingt-quatre par exemple,

- arrêt et évacuation de l'outil et de l'ensemble de pompage,

-désolidarisation et évacuation du masque MF,

- amenée du masque MIS de guidage pour embout inférieur standard et immobilisation par expansion des douilles fendues de ce masque,

- dévissage à l'aide du tournevis TIS des vis 16 et engagement simultané dans les manchettes du masque,

- retrait du masque MIS, solidaire de l'embout 13 et contenant les vis 16, à l'aide de l'outil de manutention OMB; dépose de l'ensemble sur un conteneur d'évacuation des vis, dé solidarisation du masque MIS et de l'embout 13,

- éjection des vis 16 à l'aide de l'outil poussoir OP,

- reprise du masque MIS à l'aide de l'outil de ma nutention OMB et dépose sur son stand de stockage.

L'ascenseur portant l'alévole inférieur AI est alors descendu jusqu'à sa position basse. L'alvéole supérieur AS est placé sur l'ascenseur au niveau haut d'accrochage, puis aligné avec l'alvéole inférieur AI. L'outil de transfert des crayons est positionné au-dessus des alvéoles et ses colonnes de supportage 116 sont engagées sur les colonnes de la platine ASI. La pince est descendue à travers le squelette supérieur jusqu'au niveau du bouchon du crayon 11 à extraire. La pince est verrouillée puis levée pour transférer le crayon jusque dans le squelette supérieur (Figure 22C). Le crayon est libéré puis les opérations sont reprises jusqu'à achèvement du transfert des crayons (au nombre de 264 par exemple).

Une fois les crayons transférés, le squelette doit être muni d'embouts neufs pour reconstituer un assemblage complet. Le montage des embouts implique les opérations suivantes:

Amenée et mise en place de l'embout inférieur:

- Le masque MIS, déjà solidarisé de l'embout inférieur à placer et contenant les vingt-quatre vis neuves de fixation sur le'squelette est amené à l'aide de l'outil de manutention OMB, et mis en place sur le squelette.

- Le niveau du masque peut être vérifié, par exemple à l'aide d'un outil toise OT du genre montré en Figure 21,

- Chacune des, vingt-quatre vis est vissée avec un couple approprié à l'aide de l'outil tournevis TIA,

- Les jupes des vingt-quatre vis sont successivement défiormées par accostage et descente de l'outil d'expansion OEI pour rendre les vis indesserrables,

- Le masque MIS est déposé sur stand de stockage.

Le bouchon inférieur BSI de l'alvéole supérieur AS est vissé sur sa platine ASI, puis l'alvéole supérieur AS est repris à l'aide de l'outil de manutention OMA, déposé sur le retourneur, puis basculé de 180°.

Avant de ramener l'alvéole supérieur sur l'ascenseur, assemblage usagé vidé de ses crayons peut être complété par un embout et évacué: pour cela, l'ascenseur de la station de réparation est remonté en position haute. L'embout inférieur du squelette endommagé, toujours fixé au masque MIS, est remis en place sur ce squelette à l'aide de l'outil de manutention OMB et quatre vis sont revissées sur leurs tubes guides, afin de permettre l'évacuation du squelette. L'ascenseur est descendu en position basse, le squelette endommagé est évacué vers une aire de stockage. L'ascenseur est remonté, puis le bouchon inférieur BII de l'alvéole AI est fixé. L'alvéole inférieur est retiré de la station et placé sur une position d'attente.

Amenée et mise en place de l'embout supérieur:

- On ramène l'alvéole supérieur AS sur l'ascenseur, au point bas d'accrochage,

- On amène, à l'aide de l'outil de manutention, le masque MIS déjà solidaire de l'embout 14 supérieur et contenant vingt-quatre vis neuves de fixation sur le squelette de l'assemblage reconstitué et on le place sur les tirants,

- On contrôle le niveau du masque avec l'outil toise OT,

- On visse les vingt-quatre douilles filetées individuellement avec l'outil tournevis TIA dans les tubes guides,

- On déforme les jupes des douilles filetées pour les rendre imperdables et indesserrables, à l'aide d'un outil d'expansion similaire à l'outil OEI,

- On descend l'ascenseur jusqu'à sa position basse.

L'assemblage reconstitué est alors évacué vers son stockage à l'aide du pont roulant associé à l'outil de manutention du combustible de la centrale. L'ascenseur est remonté, le bouchon supérieur BSS est fixé sur l'alvéole supérieur AS, qui est ensuite évacué vers une position de stockage. L'alvéole inférieur AI est accroché sur l'ascenseur au niveau inférieur d'accrochage, son bouchon est enlevé, puis l'ascenseur est redescendu afin de retrouver la situation initiale.

## Revendications

1. Procédé de reconstitution d'assemblage combustible nucléaire du type comprenant un squelette formé de deux embouts (13, 14) dont un est amovible reliés par des tirants fixés aux embouts et de grilles réparties entre les embouts le long des tirants et destinées à maintenir un faisceau de crayons (11) de combustible emprisonnés entre les embouts, suivant lequel on dispose l'assemblage dont les crayons de combustible (11) doivent être extraits dans un premier alvéole vertical (AI), l'embout amovible (13) dudit assemblage étant dirigé vers le haut, et on démonte ledit embout amovible;

caractérisé en ce qu'on amène, au dessus du premier alvéole (AI) et en alignement avec lui, un second alvéole (AS) contenant et retenant un squelette neuf d'assemblage démuni de ses embouts dans la même orientation que l'assemblage du premier alvéole; on interpose un masque de retenue et de guidage des crayons à extraire entre les alvéoles; on tire les crayons à extraire de l'assemblage dans le squelette; et on complète le squelette par mise en place des embouts.

2. Procédé selon la revendication 1, caractérisé en ce que, dans le cas où l'embout inférieur de l'assemblage est seul amovible, ledit assemblage est d'abord placé en position normale dans le premier alvéole (AI) et est bloqué en place dans le premier alvéole; l'alvéole est retourné; le squelette neuf est amené en position inversée dans son alvéole (AS) pour permettre de tirer vers le haut les crayons à extraire de l'assemblage contenu dans le premier alvéole vers le squelette.

3. Installation de reconstitution d'assemblage de combustible nucléaire du type comprenant un squelette formé de deux embouts (13, 14) reliés par des tirants (15) fixés aux embouts et de grilles (12) réparties entre les embouts le long des tirants et destinées à maintenir un faisceau de crayons de combustible emprisonnés entre les embouts, comprenant:

- un premier alvéole (AI) de réception d'assemblage combustible, comportant des moyens d'immobilisation de l'assemblage dans l'alvéole, disposés de façon à permettre l'enlèvement d'un des embouts,

- un second alvéole (AS) de réception d'un squelette neuf d'assemblage combustible démuni d'embouts, muni de moyens d'immobilisation du squelette,

caractérisée en ce qu'elle comprend:

- une station de réparation comportant un ascenseur capable de recevoir les deux alvéoles disposés verticalement et en alignement et d'amener les alvéoles à un niveau tel qu'il subsiste une couche d'eau de protection au-dessus des crayons,

- un masque (MA) de retenue de squelette et de guidage de crayons destiné à être interposé entre les alvéoles,

- un outil de transfert (106) pour tirer un crayon de combustible à la fois dans le squelette à partir de l'assemblage contenu dans le premier alvéole,

- et des moyens de montage des embouts sur le squelette.

4. Installation selon la revendication 3, caractérisée en ce que chaque alvéole (AI, AS) est muni, à chaque extrémité, d'une platine (AII, AIS, ASI, ASS) portant des colonnes (58, 82) de réception d'un outil (OMA) de manutention des alvéoles.

5. Installation selon la revendication 4, caractérisée en ce que certaines au moins des platines sont prévues pour recevoir un bouchon amovible (BIS, BSI) également muni de colonnes de réception d'un outil de manutention des masques et bouchons (OMB).

6. Installation selon la revendication 5, caractérisée en ce que l'un au moins des bouchons (BIS, BSI) comporte un organe (69, 74) de retenue axiale de l'assemblage ou du squelette contenu dans l'alvéole, organe déplaçable axialement à l'aide d'un outil agissant à distance, de façon que ledit organe puisse immobiliser l'assemblage du squelette en cas de retournement de l'alvéole.

7. Installation selon l'une quelconque des revendications 4 à 6, destinée à reconstituer un assemblage à partir d'un assemblage dont seul l'embout inférieur est enlevable, caractérisée en ce que la platine inférieure (AII) du premier alvéole et la platine supérieure (ASS) du second alvéole portent des patins rapprochables de serrage (62) constituant les moyens d'immobilisation et de centrage d'assemblage ou de squelette.

8. Installation selon l'une quelconque des revendications 4 à 7, caractérisée en ce qu'elle comporte également un dispositif de retournement permettant de basculer de 180° chacun des alvéoles.

9. Installation selon l'une quelconque des revendications 3 à 8, caractérisée en ce que le masque de retenue de squelette est muni de moyens permettant defixer, à la platine du second alvéole qui est tournée vers le bas lors du transfert, le masque présentant des ouvertures guidage de l'outil de transfert des crayons (106) permettant d'extraire un crayon à la fois.

10. Installation selon la revendication 9, caractérisée en ce qu'elle comporte au moins un masque supplémentaire (MIS) de guidage d'outil de démontage de l'embout de l'assemblage dont les crayons sont à extraire, masque muni de moyens désarmables de centrage et de fixation sur l'embout et de colonnes de réception d'un outil de manutention.

11. Installation selon la revendication 8 ou l'une quelconque des revendications qui en dépendent, caractérisée en ce que le dispositif de retournement comporte un châssis déplaçable et de hauteur réglable, portant deux ensembles de réception de demi-axes (56) prévus au milieu des alvéoles, et des moyens à commande manuelle agissant sur un au moins des demi-axes pour basculer l'alvéole.

## Patentansprüche

1. Verfahren zum Wiederherstellen von Kernbrennelementkassetten mit einem Skelett, das aus zwei Endstücken (13, 14) gebildet wird, von denen eins abnehmbar ist, die über an den Endstücken befestigte Züge verbunden sind und mit zwischen den Endstücken entlang der Züge verteilten Gittern, die dazu bestimmt sind ein Brennelementbündel (11), das zwischen den Endstücken eingeschlossen ist zu haltern, wobei die Kassette, dessen Brennstäbe (11) in eine erste vertikale Zelle (AI) herausgezogen werden müssen abgestellt wird, das abnehmbare Endstück (13) der Kassette nach oben bewegt wird und abmontiert wird,

dadurch gekennzeichnet,

daß über die erste Zelle (AI) und in Ausrichtung mit dieser eine zweite Zeile (AS) angeordnet wird, die ein neues Brennelementkassettenskelett enthält und zurückhält, das mit seinen Endstücken in derselben Ausrichtung gehalten ist wie die Brennelementkassette der ersten Zelle, wobei eine Rückhalte- und Ausrichtmaske für die herauszuziehenden Brennstäbe zwischen den Zellen angeordnet wird und die herauszuziehenden Brennstäbe der Brennelementkassette in dem Skelett herausgezogen werden und die Skelette durch Anbringen der Endstücke komplettiert werden.

2. Verfahren nach Anspruch 1,
dadurch gekennzeichnet, daß in dem Fall, in dem das untere Endstück der Brennelementkassette einzig abnehmbar ist, die Brennelementkassette zuerst in der ersten Zelle (AI) in normaler Position angeordnet wird und dort in dieser Stellung in der ersten Zelle arretiert wird, die Zelle gedreht wird und das neue Skelett in umgekehrter Lage in ihre Zelle (AS) gebracht wird um es zu ermöglichen die herauszuziehenden Brennstäbe der Brennelementkassette, die in der ersten Zelle angeordnet ist, in Richtung auf das Skelett zu ziehen.

3. Anordnung zur Wiederherstellung von Kernbrennelementkassetten mit einem Skelett, das zwei Endstücke (13, 14) aufweist, die durch an den Endstücken befestigte Züge (15) miteinander verbunden sind und mit zwischen den Endstücken entlang der Züge angeordneten Gittern, die dazu bestimmt sind ein Brennelementbündel, das zwischen den Endstücken eingeschlossen ist, zu haltern, mit:
- einer ersten Zelle (AS) zur Aufnahme der Brennelementkassette, die Organe zur Arretierung der Kassette in der Zelle aufweist, die so angeordnet sind, daß ein Endstück abnehmbar ist,
- einer zweiten Zelle (AS) zur Aufnahme eines neuen Brennelementkassettenskeletts, das mit Endstücken versehen ist, die mit Befestigungsmitteln für das Skelett ausgerüstet sind,
gekennzeichnet durch eine Reparaturstation, die einen Aufzug aufweist, der zwei vertikale und zueinander ausgerichtete Zellen aufnehmen und diese auf eine Höhe transportieren kann, in der eine Schutzschicht aus Wasser oberhalb der Brennstäbe verbleibt, eine Halterungsmaske (MR) des Skelettes zur Führung der Brennstäbe, die dazu bestimmt ist zwischen den Zellen angeordnet zu werden, einem Transfer-Werkzeug (106) zum Ziehen eines Brennstabes gleichzeitig in dem Skelett ausgehend von der Brennelementkassette, die in der ersten Zelle enthalten ist, und Organe zur Montage der Endstücke der Skelette.

4. Anordnung nach Anspruch 3,
dadurch gekennzeichnet, daß jede Zelle (AI, AS) an jedem Ende mit einer Platte (AII, AIS, ASI, ASS) versehen ist, die Aufnahmesäulen (58, 82) für ein Werkzeug (OMA) zur Handhabung der Zellen trägt.

5. Anordnung nach Anspruch 4,
dadurch gekennzeichnet, daß mindestens bestimmte dieser Platten vorgesehen sind, um einen abnehmbaren Verschluß (BIS, BSI) aufzunehmen, der ebenfalls mit Aufnahmesäulen für ein Werkzeug zur Handhabung der Masken und Verschlüsse (OMB) zu versehen ist.

6. Anordnung nach Anspruch 5,
dadurch gekennzeichnet, daß mindestens einer der Verschlüsse (BIS, BSI) ein Rückhalteorgan (69, 74) aufweist, zur axialen Halterung der Brennelementkassette oder des Skeletts, das in der Zelle enthalten ist, wobei dieses Organ axial mit Hilfe eines Werkzeugs verschiebbar ist, das fernbedient wird, derart, daß das Organ die Brennelementkassette des Skeletts arretieren kann, wenn die Zelle gedreht wird.

7. Anordnung nach einem der Ansprüche 4 bis 6,
die dazu bestimmt ist eine Brennelementkassette ausgehend von einer Kassette wieder herzustellen, bei der lediglich das untere Endstück abnehmbar ist,
dadurch gekennzeichnet, daß die untere Platte (AII) der ersten Zelle und die obere Platte (ASS) der zweiten Zelle einander annäherbare Klemmkufen (62) aufweisen, die die Organe zur Festlegung und Zentrierung der Kassette oder des Skeletts bilden.

8. Anordnung nach einem der Ansprüche 4 bis 7,
gekennzeichnet durch eine Drehvorrichtung, die es ermöglicht jede Zelle um 180° zu drehen.

9. Anordnung nach einem der Ansprüche 3 bis 8, dadurch gekennzeichnet, dass die Halterungsmaske des Skeletts mit Organen versehen ist, die erlauben, diejenige Maske, die Führungsöffnungen für das Transferwerkzeug (106) aufweist, durch die jeweils ein Brennstab herausgezogen werden kann, an der Platte der zweiten Zelle zu befestigen, die während des Transfers nach unten gedreht ist.

10. Anordnung nach Anspruch 9,
gekennzeichnet durch mindestens eine zusätzliche Maske (MIS) zur Führung des Werkzeugs zur Demontage des Endstücks der Brennelementkassette, deren Brennstäbe herauszuziehen sind, wobei die Maske mit auflegbaren Organen zur Zentrierung und Befestigung auf dem Endstück und den Aufnahmesäulen eines Handhabungswerkzeugs versehen ist.

11. Anordnung nach Anspruch 8 oder einem davon abhängigen Anspruch,
dadurch gekennzeichnet, daß die Drehvorrichtung ein verschiebbares und in der Höhe einstellbares Gehäuse aufweist, das zwei Aufnahmeeinheiten für die Halbachsen (56) aufweist, die in der Mitte der Zellen vorgesehen sind und Organe zur manuellen Steuerung, die auf mindestens eine der Halbachsen einwirken um die Zelle zu schwenken.

## Claims

1. A method for rebuilding a nuclear fuel assembly of the type comprising a skeleton having two end members (13, 14) one of which is removable, connected by tie rods attached to the end members and grids distributed between the end members along the tie rods and adapted to retain a cluster of fuel rods (11) retained between the end members, according to which the assembly whose fuel elements (11) should be removed is disposed in a first vertical chamber (AI), the removable end member (13) of said assembly being directed upwardly and said removable end member is removed; characterized in that a second chamber (AS) containing and retaining a new assembly skeleton without its end members is moved to a position above the first chamber (AI), in alignment therewith and in the same orientation as the fuel assembly in the first chamber; a mask for retaining and guiding the rods to be extracted is located between the chambers; the rods to be extracted from the fuel assembly are drawn into the skeleton; and the skeleton is completed by fixing end members.

2. A method according to claim 1, characterized in that, when the lower end member of the assembly only is removable, said assembly is first placed in its normal position in the first chamber (AI) and is locked in position in the first chamber; the chamber is turned over, the new skeleton is moved into an inverted position in its chamber (AS) for making it possible to draw the rods to be extracted upwardly from the assembly contained in the first chamber upwardly toward the skeleton.

3. An apparatus for rebuilding a nuclear fuel assembly of the type comprising a skeleton having two end members (13, 14) connected by tie rods (15) attached to the end members and grids (12) distributed between the end members along the tie rods and adapted to retain a cluster of fuel rods retained between the end members, comprising:
- a first chamber (AI) for receiving a fuel assembly, comprising means for retaining the assembly in the chamber, so located as to permit removal of one of the end members,
- a second chamber (AS) for receiving a new fuel assembly skeleton without end members, provided with means for immobilizing the skeleton, characterized in that it comprises:
- a repair station comprising a lift arranged to receive the two vertically disposed aligned chambers and to bring the chambers to a level such that there subsists a layer of protective water above the rods,
- a skeleton retaining and rod guiding mask (MR) arranged for being located between the chambers,
- a transfer tool (106) for drawing one fuel rod at a time into the skeleton from the assembly contained in the first chamber, and means for mounting the end members onto the skeleton.

4. Apparatus according to claim 3, characterized in that each chamber (AI, AS) is provided, at each end thereof, with a plate (AII, AIS, ASI, ASS) carrying columns (58, 82) for receiving a chamber handling tool (OMA).

5. Apparatus according to claim 4, characterized in that some at least of the plates are arranged for receiving a detachable plug (BIS, BSI) also provided with columns for receiving a tool for handling masks and plugs (OMB).

6. Apparatus according to claim 5, characterized in that one at least of the plugs (BIS, BSI) comprises a member (69, 74) for axially retaining the assembly or skeleton contained in the chamber, such member being axially displaceable by a remote control tool so that said member can lock the assembly skeleton upon reversal of the chamber.

7. Apparatus according to any one of claims 4-6, for rebuilding an assembly starting from an assembly whose lower end member only is removable, characterized in that the lower plate (AII) of the first chamber and the upper plate (ASS) of the second chamber bear clamping pads (62) movable toward each other, constituting the means for locking and centering the assembly or skeleton.

8. Apparatus according to any one of claims 4-7, characterized in that it further comprises a turning over device for swinging any one of the chambers through 180°.

9. Apparatus according to any one of claims 3-8, characterized in that the skeleton retaining mask is provided with means permitting to connect the mask which has openings for guiding the rod transfer tool (106) which permits to remove one rod at a time, to that plate of the second chamber which is turned downwardly during transfer.

10. Apparatus according to claim 9, characterized in that it comprises at least one additional mask (MIS) for guiding the tool for removing the end member of that assembly whose rods are to be removed, the mask being provided with de-energizable means for centering and attachment to the end member and with columns for receiving a handling tool.

11. Apparatus according to claim 8 or to any one of the claims appended thereto, characterized in that the turning over device comprises a displaceable frame of adjustable height bearing two assemblies for receiving half-shafts (56) disposed in the middle of the chambers and manually controlled means acting on at least one of the half-shafts for swinging the chamber.

FIG.I.

FIG.2

104

106

22

105

FIG.3.

102

101

103

100

98

99

97

96

95

92

FIG.4.

94

FIG.5

FIG.9

FIG.6

FIG.7

FIG.7A

FIG. 8

FIG.9A.

FIG.11

OR

FIG. 10

170

OMA

172
186
184

180

182

178

176

FIG.12 .

FIG.13

FIG. 14

FIG. 15

FIG.17.

FIG.16.

FIG.18

FIG.20A

FIG.20B

FIG.19

FIG.21

236

236

228

237

226

OEI

238

232

234

OT

31

0 138 711

FIG. 22C

FIG. 22B

FIG. 22A